# EUROPEAN PATENT SPECIFICATION

(11) **EP 2 669 326 B1**
(45) Date of publication and mention of the grant of the patent: **12.06.2019**
(21) Application number: 13164399.1
(22) Date of filing: 19.04.2013
(51) Int. Cl.: C08K 5/00, A63B 37/00, C08K 5/09, C08K 5/098, A63B 37/06

(54) **Golf ball**
Golfball
Balle de golf

(30) Priority: 31.05.2012 JP 2012124002
(43) Date of publication of application: 04.12.2013
(73) Proprietor: Sumitomo Rubber Industries, Ltd., Kobe-shi, Hyogo-ken (JP)
(72) Inventor: Inoue, Hidetaka, Kobe-shi,, Hyogo 651-0072 (JP); Sajima, Takahiro, Kobe-shi, Hyogo 651-0072 (JP)
(74) Representative: Manitz Finsterwald Patent- und Rechtsanwaltspartnerschaft mbB

(56) References cited:
- EP-A2- 0 665 267
- EP-A2- 1 068 883
- EP-A2- 2 537 888
- US-A1- 2006 229 143
- US-A1- 2010 069 175

## Description

### BACKGROUND OF THE INVENTION

### Field of the Invention

The present invention relates to golf balls. Specifically, the present invention relates to golf balls that include a solid core and a cover.

### Description of the Related Art

Golf players' foremost requirement for golf balls is flight performance. In particular, golf players place importance on flight performance upon a shot with a driver. Flight performance correlates with the resilience performance of a golf ball. When a golf ball having excellent resilience performance is hit, the golf ball flies at a high speed, thereby achieving a large flight distance.

Golf balls that include a core having excellent resilience performance are disclosed in JP61-37178, JP2008-212681 (US2008/0214324), JP2008-523952 (US2006/0135287 and US2007/0173607), and JP2009-119256 (US2009/0124757).

The core disclosed in JP61-37178 is obtained from a rubber composition that includes a co-crosslinking agent and a crosslinking activator. This publication discloses palmitic acid, stearic acid, and myristic acid as the crosslinking activator.

The core disclosed in JP2008-212681 is obtained from a rubber composition that includes an organic peroxide, a metal salt of an α,β-unsaturated carboxylic acid, and a copper salt of a fatty acid.

The core disclosed in JP2008-523952 is obtained from a rubber composition that includes a metal salt of an unsaturated monocarboxylic acid, a free radical initiator, and a non-conjugated diene monomer.

The core disclosed in JP2009-119256 is obtained from a rubber composition that includes a polybutadiene whose vinyl content is equal to or less than 2%, whose cis 1,4-bond content is equal to or greater than 80%, and which has an active end modified with an alkoxysilane compound.

An appropriate trajectory height is required in order to achieve a large flight distance. A trajectory height depends on a spin rate and a launch angle. With a golf ball that achieves a high trajectory by a high spin rate, a flight distance is insufficient. With a golf ball that achieves a high trajectory by a high launch angle, a large flight distance is obtained. Use of an outer-hard/inner-soft structure in a golf ball can achieve a low spin rate and a high launch angle. Modifications regarding a hardness distribution of a core are disclosed in JP6-154357 (USP5,403,010), JP2008-194471 (USP7,344,455, US2008/0194358, US2008/0194359, and US2008/0214325), JP2008-194473 (US2008/0194357 and US2008/0312008), and JP2010-253268 (US2010/0273575).

In the core disclosed in JP6-154357, a JIS-C hardness H1 at the central point of the core is 58 to 73, a JIS-C hardness H2 in a region that extends over a distance range from equal to or greater than 5 mm to equal to or less than 10 mm from the central point is equal to or greater than 65 but equal to or less than 75, a JIS-C hardness H3 at a point located at a distance of 15 mm from the central point is equal to or greater than 74 but equal to or less than 82, and a JIS-C hardness H4 at the surface of the core is equal to or greater than 76 but equal to or less than 84. The hardness H2 is greater than the hardness H1, the hardness H3 is greater than the hardness H2, and the hardness H4 is equal to or greater than the hardness H3.

In the core disclosed in JP2008-194471, a Shore D hardness at the central point of the core is equal to or greater than 30 but equal to or less than 48, a Shore D hardness at a point located at a distance of 4 mm from the central point is equal to or greater than 34 but equal to or less than 52, a Shore D hardness at a point located at a distance of 8 mm from the central point is equal to or greater than 40 but equal to or less than 58, a Shore D hardness at a point located at a distance of 12 mm from the central point is equal to or greater than 43 but equal to or less than 61, a Shore D hardness in a region that extends over a distance range from equal to or greater than 2 mm to equal to or less than 3 mm from the surface of the core is equal to or greater than 36 but equal to or less than 54, and a Shore D hardness at the surface is equal to or greater than 41 but equal to or less than 59.

In the core disclosed in JP2008-194473, a Shore D hardness at the central point of the core is equal to or greater than 25 but equal to or less than 45, a Shore D hardness in a region that extends over a distance range from equal to or greater than 5 mm to equal to or less than 10 mm from the central point is equal to or greater than 39 but equal to or less than 58, a Shore D hardness at a point located at a distance of 15 mm from the central point is equal to or greater than 36 but equal to or less than 55, and a Shore D hardness at the surface of the core is equal to or greater than 55 but equal to or less than 75.

JP2010-253268 discloses a golf ball that includes a core, an envelope layer, an inner cover, and an outer cover. In the core, the hardness gradually increases from the central point of the core to the surface of the core. The difference between a JIS-C hardness at the surface and a JIS-C hardness at the central point is equal to or greater than 15. The hardness of the outer cover is greater than the hardness of the inner cover, and the hardness of the inner cover is greater than the hardness of the envelope layer.

EP 2 537 888 A2, which is a prior art document under Article 54 (3) EPC discloses a two-layered golf ball comprising a spherical core and a cover, wherein the core is formed from a rubber composition, which includes a base rubber, a co-crosslinking agent, a crosslinking initiator and an acid. EP 1 068 883 A2 relates to a three-layered golf ball comprising a core, an intermediate layer and a cover, wherein the core center has a JIS-C hardness in the range from at least 55 to up to 90, the intermediate layer has a JIS-C hardness in the range from at least 65 to up to 90 and the cover has a JIS-C hardness in the range from at least 65 to up to 90.

US 2010/0069175 A1 discloses a golf ball comprising a core, an envelope layer, a mid layer, a reinforcing layer and a cover, wherein the outermost cover layer less hard than the mid layer, which in turn is less hard than the envelope layer.

US 2006/229143 A1 discloses a multi-piece solid golf ball composed of a multilayer core having at least an inner core layer and an outer core layer, one or more cover layer which encloses the core, and numerous dimples formed on a surface of the cover layer.

Golf players' requirements for flight distance have been escalated more than ever. An object of the present invention is to provide a golf ball having excellent flight distance performance particularly when being hit with a driver.

### SUMMARY OF THE INVENTION

A golf ball according to the present invention includes a core and a cover positioned outside the core. The core includes a center and an envelope layer positioned outside the center. The center is formed by a rubber composition being crosslinked. The envelope layer is formed by a rubber composition being crosslinked. At least one of the rubber composition of the center and the rubber composition of the envelope layer includes :
(a) a base rubber;
(b) a co-crosslinking agent;
(c) a crosslinking initiator; and
(d) an acid and/or a salt, wherein the acid and/or salt (d) excludes the co-crosslinking agent (b), and wherein the acid and/or salt (d) is selected from the group consisting of carboxylic acids, sulfonic acids, and phosphoric acid, hydroacids, and salts thereof.
The co=crosslinking agent (b) is:
(b1) an α, β-unsaturated carboxylic acid having 3 to 8 carbon atoms; or
(b2) a metal salt of an α,β-unsaturated carboxylic acid having 3 to 8 carbon atoms.
The JIS-C hardness H(Ie) at an innermost portion of the envelope layer is greater than the JIS-C hardness H(Sc) at an outermost portion of the center. The JIS-C hardness Ho of the cover is greater than the JIS-C hardness Hs at a surface of the core. Moreover, if the JIS-C hardnesses are measured at 11 measuring points from the core center to the core surface and the distances from the central point of the core to each of these measuring points are plotted in a graph, then at the envelope layer R² of the linear approximation curve obtained by the least-square method is equal to or greater than 0.93.

Preferably, the acid and/or the salt (d) is a carboxylic acid and/or a salt thereof (d1). Preferably, a carbon number of a carboxylic acid component of the carboxylic acid and/or the salt thereof (d1) is equal to or greater than 1 but equal to or less than 30. Preferably, the carboxylic acid and/or the salt thereof (d1) is a fatty acid and/or a salt thereof.

Preferably, the carboxylic acid and/or the salt thereof (d1) is a zinc salt of a carboxylic acid. Preferably, the carboxylic acid and/or the salt thereof (d1) is one or more members selected from the group consisting of zinc octoate, zinc laurate, zinc myristate, and zinc stearate.

Preferably, the rubber composition includes 1.0 parts by weight or greater but less than 40 parts by weight of the acid and/or the salt (d) per 100 parts by weight of the base rubber (a).

Preferably, the rubber composition includes 15 parts by weight or greater but 50 parts by weight or less of the co-crosslinking agent (b) per 100 parts by weight of the base rubber (a). Preferably, the rubber composition includes 0.2 parts by weight or greater but 5.0 parts by weight or less of the crosslinking initiator (c) per 100 parts by weight of the base rubber (a).

When the rubber composition includes the α, β-unsaturated carboxylic acid (b1), the rubber composition preferably further includes a metal compound (f).

Preferably, a difference (H(Ie)-H(Sc)) between the hardness H(Ie) and the hardness H(Sc) is equal to or greater than 2. Preferably, a difference (Ho-Hs) between the hardness Ho and the hardness Hs is equal to or greater than 7.

Preferably, a thickness To of the cover is equal to or greater than 0.8 mm but equal to or less than 2.0 mm. Preferably, a diameter of the center is equal to or greater than 10 mm but equal to or less than 25 mm.

Preferably, a difference (Hs-H(0.0) ) between the hardness Hs and a JIS-C hardness H(0.0) at a central point of the core is equal to or greater than 15.

Preferably, the rubber composition further includes an organic sulfur compound (e). Preferably, the organic sulfur compound (e) is at least one member selected from the group consisting of thiophenols, diphenyl disulfides, thionaphthols, thiuram disulfides, and metal salts thereof. Preferably, the rubber composition includes 0.05 parts by weight or greater but 5 parts by weight or less of the organic sulfur compound (e) per 100 parts by weight of the base rubber (a).

In the golf ball according to the present invention, a hardness distribution of the core is appropriate. When the golf ball is hit, the energy loss is low in the core. In addition, in the golf ball, a hardness distribution of the entire ball is appropriate. When the golf ball is hit with a driver, a large flight distance is achieved. The golf ball has excellent flight distance performance.

### BRIEF DESCRIPTION OF THE DRAWINGS

FIG. 1 is a partially cutaway cross-sectional view of a golf ball according to one embodiment of the present invention; and
FIG. 2 is a line graph showing a hardness distribution of an envelope layer of the golf ball in FIG. 1.

### DESCRIPTION OF THE PREFERRED EMBODIMENTS

The following will describe in detail the present invention, based on preferred embodiments with reference to the accompanying drawings.

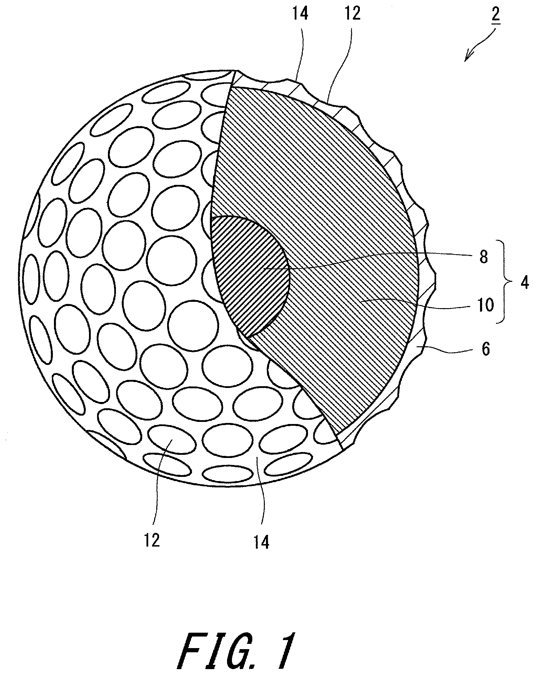

A golf ball 2 shown in FIG. 1 includes a spherical core 4 and a cover 6 positioned outside the core 4. The core 4 includes a spherical center 8 and an envelope layer 10 positioned outside the center 8. On the surface of the cover 6, a large number of dimples 12 are formed. Of the surface of the golf ball 2, a part other than the dimples 12 is a land 14. The golf ball 2 includes a paint layer and a mark layer on the external side of the cover 6, but these layers are not shown in the drawing.

The golf ball 2 preferably has a diameter of 40 mm or greater but 45 mm or less. From the standpoint of conformity to the rules established by the United States Golf Association (USGA), the diameter is particularly preferably equal to or greater than 42.67mm. In light of suppression of air resistance, the diameter is more preferably equal to or less than 44 mm and particularly preferably equal to or less than 42.80 mm. The golf ball 2 preferably has a weight of 40 g or greater but 50 g or less. In light of attainment of great inertia, the weight is more preferably equal to or greater than 44 g and particularly preferably equal to or greater than 45.00g. From the standpoint of conformity to the rules established by the USGA, the weight is particularly preferably equal to or less than 45.93 g.

In the present invention, JIS-C hardnesses are measured at 11 measuring points from the central point of the core 4 to the surface of the core 4. The distance from the central point of the core 4 to each of these measuring points is as follows.
First point: 0.0 mm
Second point: 2.5 mm
Third point: 5.0 mm
Fourth point: 7.0 mm
Fifth point: 7.5 mm
Sixth point: 8.0 mm
Seventh point: 10.0 mm
Eighth point: 12.5 mm
Ninth point: 15.0 mm
Tenth point: 17.5 mm
Eleventh point: surface

Hardnesses at the first to tenth points are measured by pressing a JIS-C type hardness scale against a cut plane of the core 4 that has been cut into two halves. A hardness at the eleventh point is measured by pressing the JIS-C type hardness scale against the surface of the spherical core 4. For the measurement, an automated rubber hardness measurement machine (trade name "P1", manufactured by Kobunshi Keiki Co., Ltd.), to which this hardness scale is mounted, is used.

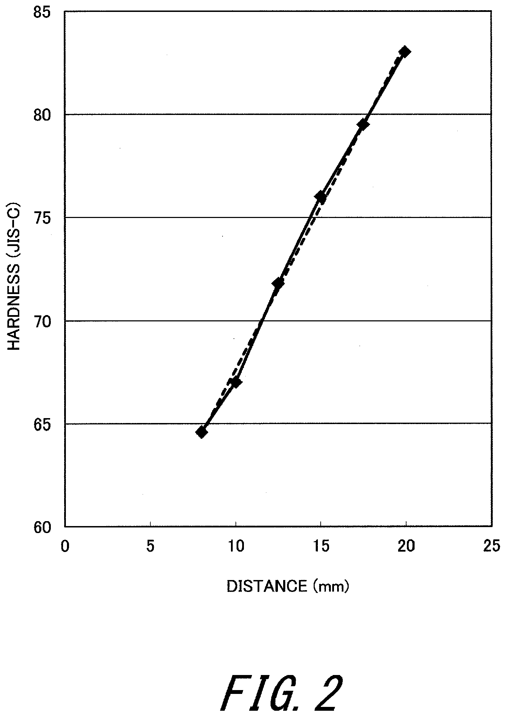

FIG. 2 is a line graph showing a hardness distribution of the golf ball 2 in FIG. 1. The horizontal axis of the graph indicates a distance (mm) from the central point of the core 4. The vertical axis of the graph indicates a JIS-C hardness. In the graph, the sixth to eleventh points included in the envelope layer 10 are plotted.

FIG. 2 also shows a linear approximation curve obtained by a least-square method on the basis of the distances and the hardnesses of the above measuring points. The linear approximation curve is indicated by a dotted line. In FIG. 2, the broken line does not greatly deviate from the linear approximation curve . In other words, the broken line has a shape close to the linear approximation curve. In the golf ball 2, the hardness continuously increases from its inside toward its outside. When the golf ball 2 is hit with a driver, the energy loss is low within the core 4. When the golf ball 2 is hit with a driver, the flight distance is large.

R² of the linear approximation curve for the envelope layer 10 which is obtained by the least-square method is preferably equal to or greater than 0.93. R² is an index indicating the linearity of the broken line. For the envelope layer 10 for which R² is equal to or greater than 0.93, the shape of the broken line of the hardness distribution is close to a straight line. The golf ball 2 that includes the envelope layer 10 for which R² is equal to or greater than 0.93 has excellent resilience performance. R² is more preferably equal to or greater than 0.95 and particularly preferably equal to or greater than 0.97. R² is calculated by squaring a correlation coefficient R. The correlation coefficient R is calculated by dividing the covariance of the distance (mm) from the central point and the hardness (JIS-C) by the standard deviation of the distance (mm) from the central point and the standard deviation of the hardness (JIS-C).

In light of suppression of spin, the gradient α of the linear approximation curve is preferably equal to or greater than 1.10, more preferably equal to or greater than 1.50, and particularly preferably equal to or greater than 1.70.

In the present invention, a JIS-C hardness at a measuring point whose distance from the central point of the core 4 is x (mm) is represented by H(x). The hardness at the central point of the core 4 is represented by H(0.0). In the present invention, the JIS-C hardness at the surface of the core 4 is represented by Hs. The difference (Hs-H(0.0)) between the surface hardness Hs and the central hardness H(0.0) is preferably equal to or greater than 15. The core 4 in which the difference (Hs-H(0.0)) is equal to or greater than 15 has an outer-hard/inner-soft structure. When the golf ball 2 is hit with a driver, the recoil (torsional return) in the core 4 is great, and thus spin is suppressed. The core 4 contributes to the flight performance of the golf ball 2. In light of flight performance, the difference (Hs-H(0.0)) is more preferably equal to or greater than 23 and particularly preferably equal to or greater than 24. From the standpoint that the core 4 can easily be formed, the difference (Hs-H(0.0)) is preferably equal to or less than 50. In the core 4, the hardness gradually increases from its central point toward its surface.

The center 8 is formed by crosslinking a rubber composition. Examples of base rubbers for use in the rubber composition include polybutadienes, polyisoprenes, styrene-butadiene copolymers, ethylene-propylene-diene copolymers, and natural rubbers. Two or more rubbers may be used in combination. In light of resilience performance, polybutadienes are preferred, and high-cis polybutadienes are particularly preferred.

Preferably, the rubber composition of the center 8 includes a co-crosslinking agent. Examples of preferable co-crosslinking agents in light of resilience performance include acrylic acid, methacrylic acid, zinc acrylate, magnesium acrylate, zinc methacrylate, and magnesium methacrylate. Preferably, the rubber composition further includes a metal compound. Examples of the metal compound include magnesium oxide and zinc oxide. Preferably, the rubber composition includes an organic peroxide together with a co-crosslinking agent. Examples of preferable organic peroxides include dicumyl peroxide, 1,1-bis(t-butylperoxy)-3,3,5-trimethylcyclohexane, 2,5-dimethyl-2,5-di(t-butylperoxy)hexane, and di-t-butyl peroxide. Preferably, the rubber composition includes a sulfur compound. The rubber composition may include an acid and/or a salt.

According to need, various additives such as a filler, sulfur, a vulcanization accelerator, an anti-aging agent, a coloring agent, a plasticizer, a dispersant, and the like are included in the rubber composition of the center 8 in an adequate amount. Synthetic resin powder or crosslinked rubber powder may also be included in the rubber composition.

In the present embodiment, the center 8 is more flexible than the envelope layer 10. The center 8 can suppress spin. The center 8 preferably has a diameter of 10 mm or greater but 25 mm or less. In the golf ball 2 that includes the center 8 having a diameter of 10 mm or greater, spin can be suppressed. In this respect, the diameter is more preferably equal to or greater than 12 mm and particularly preferably equal to or greater than 14 mm. The golf ball 2 that includes the center 8 having a diameter of 25 mm or less has excellent resilience performance, even though the center 8 is flexible. In this respect, the diameter is more preferably equal to or less than 18 mm and particularly preferably equal to or less than 16 mm.

In light of suppression of spin, a JIS-C hardness H(Sc) at an outermost portion of the center 8 is preferably equal to or greater than 55, more preferably equal to or greater than 57, and particularly preferably equal to or greater than 59. In light of continuity of the hardness distribution, the hardness H(Sc) is preferably equal to or less than 65, more preferably equal to or less than 63, and particularly preferably equal to or less than 61. The hardness H (Sc) is measured at a hemisphere obtained by cutting the core 4. The hardness H (Sc) is measured by pressing a JIS-C type hardness scale against the cut plane of the hemisphere. The hardness scale is pressed against a region surrounded by : a first circle that is the boundary between the center 8 and the envelope layer 10; and a second circle that is concentric with the first circle and has a radius smaller than the radius of the first circle by 1 mm. For the measurement, an automated rubber hardness measurement machine (trade name "P1", manufactured by Kobunshi Keiki Co., Ltd.), to which this hardness scale is mounted, is used. The hardness H(Sc) in the present embodiment is the same as H(7.0).

The envelope layer 10 is formed by crosslinking a rubber composition. The rubber composition includes:
(a) a base rubber;
(b) a co-crosslinking agent;
(c) a crosslinking initiator; and
(d) an acid and/or a salt.

Examples of the base rubber (a) include polybutadienes, polyisoprenes, styrene-butadiene copolymers, ethylene-propylene-diene copolymers, and natural rubbers. In light of resilience performance, polybutadienes are preferred. When a polybutadiene and another rubber are used in combination, it is preferred that the polybutadiene is included as a principal component. Specifically, the proportion of the polybutadiene to the entire base rubber is preferably equal to or greater than 50% by weight and more preferably equal to or greater than 80% by weight. The proportion of cis-1, 4 bonds in the polybutadiene is preferably equal to or greater than 40% by weight and more preferably equal to or greater than 80% by weight.

A polybutadiene in which the proportion of 1, 2-vinyl bonds is equal to or less than 2.0% by weight is preferred. The polybutadiene can contribute to the resilience performance of the golf ball 2. In this respect, the proportion of 1,2-vinyl bonds is preferably equal to or less than 1.7% by weight and particularly preferably equal to or less than 1.5% by weight.

From the standpoint that a polybutadiene having a low proportion of 1,2-vinyl bonds and excellent polymerization activity is obtained, a polybutadiene synthesized with a rare-earth-element-containing catalyst is preferred. In particular, a polybutadiene synthesized with a catalyst containing neodymium, which is a lanthanum-series rare earth element compound, is preferred.

The polybutadiene has a Mooney viscosity (ML₁₊₄(100°C)) of preferably 30 or greater, more preferably 32 or greater, and particularly preferably 35 or greater. The Mooney viscosity (ML₁₊₄(100°C)) is preferably equal to or less than 140, more preferably equal to or less than 120, even more preferably equal to or less than 100, and particularly preferably equal to or less than 80. The Mooney viscosity (ML₁₊₄(100°C)) is measured according to the standards of "JIS K6300". The measurement conditions are as follows.
Rotor: L rotor
Preheating time: 1 minute
Rotating time of rotor: 4 minutes
Temperature: 100°C
In light of workability, the polybutadiene has a molecular weight distribution (Mw/Mn) of preferably 2.0 or greater, more preferably 2.2 or greater, even more preferably 2.4 or greater, and particularly preferably 2.6 or greater. In light of resilience performance, the molecular weight distribution (Mw/Mn) is preferably equal to or less than 6.0, more preferably equal to or less than 5.0, even more preferably equal to or less than 4.0, and particularly preferably equal to or less than 3.4. The molecular weight distribution (Mw/Mn) is calculated by dividing the weight average molecular weight Mw by the number average molecular weight Mn.

The molecular weight distribution is measured by gel permeation chromatography ("HLC-8120GPC" manufactured by Tosoh Corporation). The measurement conditions are as follows.
Detector: differential refractometer
Column: GMHHXL (manufactured by Tosoh Corporation)
Column temperature: 40°C
Mobile phase: tetrahydrofuran The molecular weight distribution is calculated as a value obtained by conversion using polystyrene standard.

Examples of preferable co-crosslinking agents (b) include:
(b1) an α, β-unsaturated carboxylic acid having 3 to 8 carbon atoms; and
(b2) a metal salt of an α,β-unsaturated carboxylic acid having 3 to 8 carbon atoms.

The rubber composition may include only the α, β-unsaturated carboxylic acid (b1) or only the metal salt (b2) of the α,β-unsaturated carboxylic acid as the co-crosslinking agent (b). The rubber composition may include both the α,β-unsaturated carboxylic acid (b1) and the metal salt (b2) of the α, β-unsaturated carboxylic acid as the co-crosslinking agent (b).

The metal salt (b2) of the α, β-unsaturated carboxylic acid graft-polymerizes with the molecular chain of the base rubber, thereby crosslinking the rubber molecules. When the rubber composition includes the α, β-unsaturated carboxylic acid (b1), the rubber composition preferably further includes a metal compound (f). The metal compound (f) reacts with the α, β-unsaturated carboxylic acid (b1) in the rubber composition. A salt obtained by this reaction graft-polymerizes with the molecular chain of the base rubber.

Examples of the metal compound (f) include metal hydroxides such as magnesium hydroxide, zinc hydroxide, calcium hydroxide, sodium hydroxide, lithium hydroxide, potassium hydroxide, and copper hydroxide; metal oxides such as magnesium oxide, calcium oxide, zinc oxide, and copper oxide; and metal carbonates such as magnesium carbonate, zinc carbonate, calcium carbonate, sodium carbonate, lithium carbonate, and potassium carbonate. A compound that includes a bivalent metal is preferred. The compound that includes the bivalent metal reacts with the co-crosslinking agent (b) to form metal crosslinks. The metal compound (f) is particularly preferably a zinc compound. Two or more metal compounds may be used in combination.

Examples of the α,β-unsaturated carboxylic acid (b1) include acrylic acid, methacrylic acid, fumaric acid, maleic acid, and crotonic acid. Examples of the metal component in the metal salt (b2) of the α,β-unsaturated carboxylic acid include sodium ion, potassium ion, lithium ion, magnesium ion, calcium ion, zinc ion, barium ion, cadmium ion, aluminum ion, tin ion, and zirconium ion. The metal salt (b2) of the α, β-unsaturated carboxylic acid may include two or more types of ions. From the standpoint that metal crosslinks are likely to occur between the rubber molecules, bivalent metal ions such as magnesium ion, calcium ion, zinc ion, barium ion, and cadmium ion are preferred. The metal salt (b2) of the α, β-unsaturated carboxylic acid is particularly preferably zinc acrylate.

In light of resilience performance of the golf ball 2, the amount of the co-crosslinking agent (b) is preferably equal to or greater than 15 parts by weight and particularly preferably equal to or greater than 20 parts by weight, per 100 parts by weight of the base rubber. In light of feel at impact, the amount is preferably equal to or less than 50 parts by weight, more preferably equal to or less than 45 parts by weight, and particularly preferably equal to or less than 40 parts by weight, per 100 parts by weight of the base rubber.

The crosslinking initiator (c) is preferably an organic peroxide. The organic peroxide contributes to the resilience performance of the golf ball 2. Examples of preferable organic peroxides include dicumyl peroxide, 1,1-bis(t-butylperoxy)-3,3,5-trimethylcyclohexane, 2,5-dimethyl-2,5-di(t-butylperoxy)hexane, and di-t-butyl peroxide. In light of versatility, dicumyl peroxide is preferred.

In light of resilience performance of the golf ball 2, the amount of the crosslinking initiator (c) is preferably equal to or greater than 0.2 parts by weight and particularly preferably equal to or greater than 0.5 parts by weight, per 100 parts by weight of the base rubber. The amount of the crosslinking initiator (c) is preferably equal to or less than 5.0 parts by weight and particularly preferably equal to or less than 2.5 parts by weight, per 100 parts by weight of the base rubber.

The acid component included in the acid and/or the salt (d) has reactivity with a cationic component. During heating and forming of the envelope layer 10, the acid dissociates and reacts with the cationic component of the co-crosslinking agent (b). It is thought that within the envelope layer 10, the acid inhibits formation of the metal crosslinks by the co-crosslinking agent (b). The acid component included in the salt exchanges the cationic component with the co-crosslinking agent (b). It is inferred that during heating and forming of the envelope layer 10, the salt breaks the metal crosslinks by the co-crosslinking agent (b).

According to the present invention, the acid and/or the salt (d) is selected from the group consisting of carboxylic acids, sulfonic acids, phosphoric acid, hydroacids and salts thereof. Oxo acids and salts thereof are preferred. In light of affinity with the base rubber, the acid and/or the salt (d) is preferably a carboxylic acid and/or a salt thereof (d1). In the present invention, the co-crosslinking agent (b) is not included in the concept of the acid and/or the salt (d).

In light of reactivity with the co-crosslinking agent (b), the carbon number of the carboxylic acid component of the carboxylic acid and/or the salt thereof (d1) is preferably equal to or greater than 1 and more preferably equal to or greater than 4. The carbon number of the carboxylic acid component of the carboxylic acid and/or the salt thereof (d1) is preferably equal to or less than 30 and particularly preferably equal to or less than 25.

Examples of preferable carboxylic acids and/or salts thereof (d1) include aliphatic carboxylic acids (fatty acids) and salts thereof, and aromatic carboxylic acids and salts thereof. In light of affinity with the base rubber, fatty acids and salts thereof are preferred. The rubber composition may include a saturated fatty acid and a salt thereof, or may include an unsaturated fatty acid and a salt thereof. The saturated fatty acid and the salt thereof are more preferred.

Examples of fatty acids include butyric acid (C4), valeric acid (C5), caproic acid (C6), enanthic acid (C7), caprylic acid (octanoic acid) (C8), pelargonic acid (C9), capric acid (decanoic acid) (C10), lauric acid (C12), myristic acid (C14), myristoleic acid (C14), pentadecylic acid (C15), palmitic acid (C16), palmitoleic acid (C16), margaric acid (C17), stearic acid (C18), elaidic acid (C18), vaccenic acid (C18), oleic acid (C18), linolic acid (C18), linolenic acid (C18), 12-hydroxystearic acid (C18), arachidic acid (C20), gadoleic acid (C20), arachidonic acid (C20), eicosenoic acid (C20), behenic acid (C22), erucic acid (C22), lignoceric acid (C24), nervonic acid (C24), cerotic acid (C26), montanic acid (C28), and melissic acid (C30). Two or more fatty acids may be used in combination. Caprylic acid (octanoic acid), lauric acid, myristic acid, palmitic acid, stearic acid, oleic acid, and behenic acid are preferred.

An aromatic carboxylic acid has an aromatic ring and a carboxyl group. Examples of aromatic carboxylic acids include benzoic acid, phthalic acid, isophthalic acid, terephthalic acid, hemimellitic acid (benzene-1,2,3-tricarboxylic acid), trimellitic acid (benzene-1,2,4-tricarboxylic acid), trimesic acid (benzene-1,3,5-tricarboxylic acid), mellophanic acid (benzene-1,2,3,4-tetracarboxylic acid), prehnitic acid (benzene-1,2,3,5-tetracarboxylic acid), pyromellitic acid (benzene-1,2,4,5-tetracarboxylicacid), melliticacid(benzene hexacarboxylic acid), diphenic acid (biphenyl-2,2'-dicarboxylic acid), toluic acid (methylbenzoic acid), xylic acid, prehnitylic acid (2,3,4-trimethylbenzoic acid), γ-isodurylic acid (2,3,5-trimethylbenzoic acid), durylic acid (2, 4, 5-trimethylbenzoic acid), β-isodurylic acid (2,4,6-trimethylbenzoic acid), α-isodurylic acid (3,4,5-trimethylbenzoic acid), cuminic acid (4-isopropylbenzoic acid), uvitic acid (5-methylisophthalic acid), α-toluic acid (phenylacetic acid), hydratropic acid (2-phenylpropanoic acid), and hydrocinnamic acid (3-phenylpropanoic acid).

The rubber composition may include an aromatic carboxylic acid substituted with a hydroxyl group, an alkoxy group, or an oxo group. Examples of this carboxylic acid can include salicylic acid (2-hydroxybenzoic acid), anisic acid (methoxybenzoic acid), cresotinic acid (hydroxy(methyl) benzoic acid), o-homosalicylicacid (2-hydroxy-3-methylbenzoic acid), m-homosalicylic acid (2-hydroxy-4-methylbenzoic acid), p-homosalicylic acid (2-hydroxy-5-methylbenzoic acid), o-pyrocatechuic acid (2, 3-dihydroxybenzoic acid), β-resorcylic acid (2,4-dihydroxybenzoic acid), γ-resorcylic acid (2,6-dihydroxybenzoic acid), protocatechuic acid (3,4-dihydroxybenzoic acid), α-resorcylic acid (3,5-dihydroxybenzoic acid), vanillic acid (4-hydroxy-3-methoxybenzoic acid), isovanillic acid (3-hydroxy-4-methoxybenzoic acid), veratric acid (3,4-dimethoxybenzoic acid), o-veratric acid (2,3-dimethoxybenzoic acid), orsellinic acid (2,4-dihydroxy-6-methylbenzoic acid), m-hemipinic acid (4,5-dimethoxyphthalic acid), gallic acid (3,4,5-trihydroxybenzoic acid), syringic acid (4-hydroxy-3,5-dimethoxybenzoic acid), asaronic acid (2,4,5-trimethoxybenzoic acid), mandelic acid (hydroxy(phenyl)acetic acid), vanillylmandelic acid (hydroxy(4-hydroxy-3-methoxyphenyl)acetic acid), homoanisic acid ((4-methoxyphenyl)acetic acid), homogentisic acid ((2,5-dihydroxyphenyl)acetic acid), homoprotocatechuic acid ((3,4-dihydroxyphenyl)acetic acid), homovanillic acid ((4-hydroxy-3-methoxyphenyl)acetic acid), homoisovanillic acid ((3-hydroxy-4-methoxyphenyl)acetic acid), homoveratric acid ((3,4-dimethoxyphenyl)acetic acid), o-homoveratric acid ((2,3-dimethoxyphenyl)acetic acid), homophthalic acid (2-(carboxymethyl)benzoic acid), homoisophthalic acid (3-(carboxymethyl)benzoic acid), homoterephthalic acid (4-(carboxymethyl)benzoic acid), phthalonic acid (2-(carboxycarbonyl)benzoic acid), isophthalonic acid (3-(carboxycarbonyl)benzoic acid), terephthalonic acid (4-(carboxycarbonyl)benzoic acid), benzilic acid (hydroxydiphenylacetic acid), atrolactic acid (2-hydroxy-2-phenylpropanoic acid), tropic acid (3-hydroxy-2-phenylpropanoic acid), melilotic acid (3-(2-hydroxyphenyl)propanoic acid), phloretic acid (3-(4-hydroxyphenyl)propanoic acid), hydrocaffeic acid (3-(3,4-dihydroxyphenyl)propanoic acid), hydroferulic acid (3-(4-hydroxy-3-methoxyphenyl)propanoic acid), hydroisoferulic acid (3-(3-hydroxy-4-methoxyphenyl)propanoic acid), p-coumaric acid (3-(4-hydroxyphenyl)acrylic acid), umbellic acid (3-(2,4-dihydroxyphenyl)acrylic acid), caffeic acid (3-(3,4-dihydroxyphenyl)acrylic acid), ferulic acid (3-(4-hydroxy-3-methoxyphenyl)acrylic acid), isoferulic acid (3-(3-hydroxy-4-methoxyphenyl)acrylic acid), and sinapic acid (3-(4-hydroxy-3,5-dimethoxyphenyl)acrylic acid).

The cationic component included in the acid and/or the salt (d) is a metal ion or an organic cation. Examples of the metal ion include sodium ion, potassium ion, lithium ion, silver ion, magnesium ion, calcium ion, zinc ion, barium ion, cadmium ion, copper ion, cobalt ion, nickel ion, manganese ion, aluminum ion, iron ion, tin ion, zirconium ion, and titanium ion. Two or more types of ions may be used in combination. Zinc ion and magnesium ion are preferred.

The organic cation has a carbon chain. Examples of the organic cation include organic ammonium ions. Examples of organic ammonium ions include primary ammonium ions such as stearylammonium ion, hexylammonium ion, octylammonium ion, and 2-ethylhexylammonium ion; secondary ammonium ions such as dodecyl(lauryl)ammonium ion, and octadecyl(stearyl)ammonium ion; tertiary ammonium ions such as trioctylammonium ion; and quaternary ammonium ions such as dioctyldimethylammonium ion, and distearyldimethylammonium ion. Two or more types of organic cations may be used in combination.

In light of ease of the above cation exchange reaction, a salt of a fatty acid is particularly preferred. A fatty acid and a salt of a fatty acid may be used in combination, and salts of two or more fatty acids may be used in combination.

Examples of preferable carboxylic acids and/or salts thereof (d1) include potassium salts, magnesium salts, aluminum salts, zinc salts, iron salts, copper salts, nickel salts, and cobalt salts of octanoic acid, lauric acid, myristic acid, palmitic acid, stearic acid, oleic acid, and behenic acid. Zinc salts of carboxylic acids are particularly preferred. Specific examples of preferable carboxylic acids and/or salts thereof (d1) include zinc octoate, zinc laurate, zinc myristate, and zinc stearate.

In light of linearity of the hardness distribution of the envelope layer 10, the amount of the acid and/or the salt (d) is preferably equal to or greater than 0.5 parts by weight, more preferably equal to or greater than 1.0 parts by weight, and particularly preferably equal to or greater than 2.0 parts by weight, per 100 parts by weight of the base rubber. In light of resilience performance, the amount is preferably less than 40 parts by weight, more preferably equal to or less than 30 parts by weight, and particularly preferably equal to or less than 20 parts by weight, per 100 parts by weight of the base rubber.

The weight ratio of the co-crosslinking agent (b) and the acid and/or the salt (d) in the rubber composition is preferably equal to or greater than 3/7 but equal to or less than 9/1, and is particularly preferably equal to or greater than 4/6 but equal to or less than 8/2. From the rubber composition in which this weight ratio is within the above range, the core 4 having an appropriate hardness distribution can be obtained.

As the co-crosslinking agent (b), zinc acrylate is preferably used. Zinc acrylate whose surface is coated with stearic acid or zinc stearate for the purpose of improving dispersibility to rubber is present. When the rubber composition includes this zinc acrylate, the stearic acid or zinc stearate coating the zinc acrylate is not included in the concept of the acid and/or the salt (d).

The rubber composition preferably further includes an organic sulfur compound (e). The organic sulfur compound (e) can contribute to control of: the linearity of the hardness distribution of the core 4; and the degree of the outer-hard/inner-soft structure. An example of the organic sulfur compound (e) is an organic compound having a thiol group or a polysulfide linkage having 2 to 4 sulfur atoms. A metal salt of this organic compound is also included in the organic sulfur compound (e). Examples of the organic sulfur compound (e) include aliphatic compounds such as aliphatic thiols, aliphatic thiocarboxylic acids, aliphatic dithiocarboxylic acids, and aliphatic polysulfides; heterocyclic compounds; alicyclic compounds such as alicyclic thiols, alicyclic thiocarboxylic acids, alicyclic dithiocarboxylic acids, and alicyclic polysulfides; and aromatic compounds. Specific examples of the organic sulfur compound (e) include thiophenols, thionaphthols, polysulfides, thiocarboxylic acids, dithiocarboxylic acids, sulfenamides, thiurams, dithiocarbamates, and thiazoles. Preferable organic sulfur compounds (e) are thiophenols, diphenyl disulfides, thionaphthols, thiuram disulfides, and metal salts thereof.

Specific examples of the organic sulfur compound (e) are represented by the following chemical formulas (1) to (4).

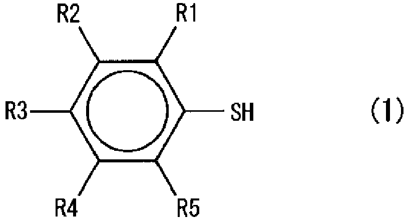

In the chemical formula (1), R1 to R5 each represent H or a substituent.

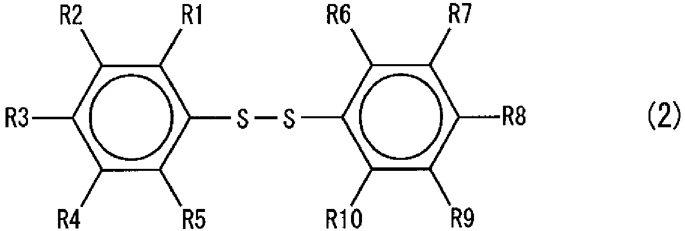

In the chemical formula (2), R1 to R10 each represent H or a substituent.

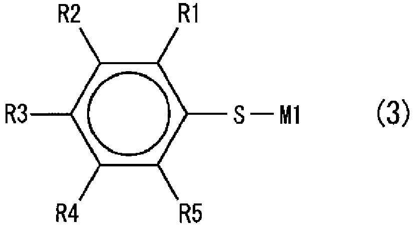

In the chemical formula (3), R1 to R5 each represent H or a substituent, and M1 represents a monovalent metal atom.

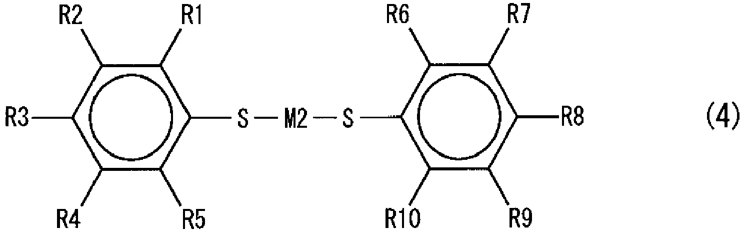

In the chemical formula (4), R1 to R10 each represent H or a substituent, and M2 represents a bivalent metal atom.

In the formulas (1) to (4), each substituent is at least one group selected from the group consisting of a halogen group (F, Cl, Br, I), an alkyl group, a carboxyl group (-COOH), an ester (-COOR) of a carboxyl group, a formyl group (-CHO), an acyl group (-COR), a carbonyl halide group (-COX), a sulfo group (-SO₃H), an ester(-SO₃R) of a sulfo group, a sulfonyl halide group (-SO₂X), a sulfino group (-SO₂H), an alkylsulfinyl group (-SOR), a carbamoyl group (-CONH₂), an alkyl halide group, a cyano group (-CN), and an alkoxy group (-OR).

Examples of the organic sulfur compound represented by the chemical formula (1) include thiophenol; thiophenols substituted with halogen groups, such as 4-fluorothiophenol, 2,5-difluorothiophenol, 2,4,5-trifluorothiophenol, 2,4,5,6-tetrafluorothiophenol, pentafluorothiophenol, 2-chlorothiophenol, 4-chlorothiophenol, 2,4-dichlorothiophenol, 2,5-dichlorothiophenol, 2,6-dichlorothiophenol, 2,4,5-trichlorothiophenol, 2,4,5,6-tetrachlorothiophenol, pentachlorothiophenol, 4-bromothiophenol, 2,5-dibromothiophenol, 2,4,5-tribromothiophenol, 2,4,5,6-tetrabromothiophenol, pentabromothiophenol, 4-iodothiophenol, 2,5-diiodothiophenol, 2,4,5-triiodothiophenol, 2,4,5,6-tetraiodothiophenol, and pentaiodothiophenol; thiophenols substituted with alkyl groups, such as 4-methylthiophenol, 2,4,5-trimethylthiophenol, pentamethylthiophenol, 4-t-butylthiophenol, 2,4,5-tri-t-butylthiophenol, and penta-t-butylthiophenol; thiophenols substituted with carboxyl groups, such as 4-carboxythiophenol, 2,4,6-tricarboxythiophenol, and pentacarboxythiophenol; thiophenols substituted with alkoxycarbonyl groups, such as 4-methoxycarbonylthiophenol, 2,4,6-trimethoxycarbonylthiophenol, and pentamethoxycarbonylthiophenol; thiophenols substituted with formyl groups, such as 4-formylthiophenol, 2,4,6-triformylthiophenol, and pentaformylthiophenol; thiophenols substituted with acyl groups, such as 4-acetylthiophenol, 2,4,6-triacetylthiophenol, and pentaacetylthiophenol; thiophenols substituted with carbonyl halide groups, such as 4-chlorocarbonylthiophenol, 2,4,6-tri(chlorocarbonyl)thiophenol, and penta (chlorocarbonyl)thiophenol; thiophenols substituted with sulfo groups, such as 4-sulfothiophenol, 2,4,6-trisulfothiophenol, and pentasulfothiophenol; thiophenols substituted with alkoxysulfonyl groups, such as 4-methoxysulfonylthiophenol, 2,4,6-trimethoxysulfonylthiophenol, and pentamethoxysulfonylthiophenol; thiophenols substituted with sulfonyl halide groups, such as 4-chlorosulfonylthiophenol, 2,4,6-tri(chlorosulfonyl)thiophenol, and penta (chlorosulfonyl)thiophenol; thiophenols substituted with sulfino groups, such as 4-sulfinothiophenol, 2,4,6-trisulfinothiophenol, and pentasulfinothiophenol; thiophenols substituted with alkylsulfinyl groups, such as 4-methylsulfinylthiophenol, 2,4,6-tri(methylsulfinyl)thiophenol, and penta (methylsulfinyl)thiophenol; thiophenols substituted with carbamoyl groups, such as 4-carbamoylthiophenol, 2,4,6-tricarbamoylthiophenol, and pentacarbamoylthiophenol; thiophenols substituted with alkyl halide groups, such as 4-trichloromethylthiophenol, 2,4,6-tri(trichloromethyl)thiophenol, and penta(trichloromethyl)thiophenol; thiophenols substituted with cyano groups, such as 4-cyanothiophenol, 2,4,6-tricyanothiophenol, and pentacyanothiophenol; and thiophenols substituted with alkoxy groups, such as 4-methoxythiophenol, 2,4,6-trimethoxythiophenol, and pentamethoxythiophenol. Each of these thiophenols is substituted with one type of substituent.

Another example of the organic sulfur compound represented by the chemical formula (1) is a compound substituted with at least one type of the above substituents and another substituent. Examples of the other substituent include a nitro group (-NO₂), an amino group (-NH₂), a hydroxyl group (-OH), and a phenylthio group (-SPh). Specific examples of the compound include 4-chloro-2-nitrothiophenol, 4-chloro-2-aminothiophenol, 4-chloro-2-hydroxythiophenol, 4-chloro-2-phenylthiothiophenol, 4-methyl-2-nitrothiophenol, 4-methyl-2-aminothiophenol, 4-methyl-2-hydroxythiophenol, 4-methyl-2-phenylthiothiophenol, 4-carboxy-2-nitrothiophenol, 4-carboxy-2-aminothiophenol, 4-carboxy-2-hydroxythiophenol, 4-carboxy-2-phenylthiothiophenol, 4-methoxycarbonyl-2-nitrothiophenol, 4-methoxycarbonyl-2-aminothiophenol, 4-methoxycarbonyl-2-hydroxythiophenol, 4-methoxycarbonyl-2-phenylthiothiophenol, 4-formyl-2-nitrothiophenol, 4-formyl-2-aminothiophenol, 4-formyl-2-hydroxythiophenol, 4-formyl-2-phenylthiothiophenol, 4-acetyl-2-nitrothiophenol, 4-acetyl-2-aminothiophenol, 4-acetyl-2-hydroxythiophenol, 4-acetyl-2-phenylthiothiophenol, 4-chlorocarbonyl-2-nitrothiophenol, 4-chlorocarbonyl-2-aminothiophenol, 4-chlorocarbonyl-2-hydroxythiophenol, 4-chlorocarbonyl-2-phenylthiothiophenol, 4-sulfo-2-nitrothiophenol, 4-sulfo-2-aminothiophenol, 4-sulfo-2-hydroxythiophenol, 4-sulfo-2-phenylthiothiophenol, 4-methoxysulfonyl-2-nitrothiophenol, 4-methoxysulfonyl-2-aminothiophenol, 4-methoxysulfonyl-2-hydroxythiophenol, 4-methoxysulfonyl-2-phenylthiothiophenol, 4-chlorosulfonyl-2-nitrothiophenol, 4-chlorosulfonyl-2-aminothiophenol, 4-chlorosulfonyl-2-hydroxythiophenol, 4-chlorosulfonyl-2-phenylthiothiophenol, 4-sulfino-2-nitrothiophenol, 4-sulfino-2-aminothiophenol, 4-sulfino-2-hydroxythiophenol, 4-sulfino-2-phenylthiothiophenol, 4-methylsulfinyl-2-nitrothiophenol, 4-methylsulfinyl-2-aminothiophenol, 4-methylsulfinyl-2-hydroxythiophenol, 4-methylsulfinyl-2-phenylthiothiophenol, 4-carbamoyl-2-nitrothiophenol, 4-carbamoyl-2-aminothiophenol, 4-carbamoyl-2-hydroxythiophenol, 4-carbamoyl-2-phenylthiothiophenol, 4-trichloromethyl-2-nitrothiophenol, 4-trichloromethyl-2-aminothiophenol, 4-trichloromethyl-2-hydroxythiophenol, 4-trichloromethyl-2-phenylthiothiophenol, 4-cyano-2-nitrothiophenol, 4-cyano-2-aminothiophenol, 4-cyano-2-hydroxythiophenol, 4-cyano-2-phenylthiothiophenol, 4-methoxy-2-nitrothiophenol, 4-methoxy-2-aminothiophenol, 4-methoxy-2-hydroxythiophenol, and 4-methoxy-2-phenylthiothiophenol.

Still another example of the organic sulfur compound represented by the chemical formula (1) is a compound substituted with two or more types of substituents. Specific examples of the compound include 4-acetyl-2-chlorothiophenol, 4-acetyl-2-methylthiophenol, 4-acetyl-2-carboxythiophenol, 4-acetyl-2-methoxycarbonylthiophenol, 4-acetyl-2-formylthiophenol, 4-acetyl-2-chlorocarbonylthiophenol, 4-acetyl-2-sulfothiophenol, 4-acetyl-2-methoxysulfonylthiophenol, 4-acetyl-2-chlorosulfonylthiophenol, 4-acetyl-2-sulfinothiophenol, 4-acetyl-2-methylsulfinylthiophenol, 4-acetyl-2-carbamoylthiophenol, 4-acetyl-2-trichloromethylthiophenol, 4-acetyl-2-cyanothiophenol, and 4-acetyl-2-methoxythiophenol.

Examples of the organic sulfur compound represented by the chemical formula (2) include diphenyl disulfide; diphenyl disulfides substituted with halogen groups, such as bis(4-fluorophenyl)disulfide, bis(2,5-difluorophenyl)disulfide, bis(2,4,5-trifluorophenyl)disulfide, bis(2,4,5,6-tetrafluorophenyl) disulfide, bis(pentafluorophenyl)disulfide, bis(4-chlorophenyl)disulfide, bis(2,5-dichlorophenyl)disulfide, bis(2,4,5-trichlorophenyl)disulfide, bis(2,4,5,6-tetrachlorophenyl) disulfide, bis(pentachlorophenyl)disulfide, bis(4-bromophenyl)disulfide, bis(2,5-dibromophenyl)disulfide, bis(2,4,5-tribromophenyl)disulfide, bis(2,4,5,6-tetrabromophenyl) disulfide, bis(pentabromophenyl)disulfide, bis(4-iodophenyl)disulfide, bis(2,5-diiodophenyl)disulfide, bis(2,4,5-triiodophenyl)disulfide, bis(2,4,5,6-tetraiodophenyl)disulfide, and bis(pentaiodophenyl)disulfide; diphenyl disulfides substituted with alkyl groups, such as bis(4-methylphenyl)disulfide, bis(2,4,5-trimethylphenyl)disulfide, bis(pentamethylphenyl)disulfide, bis(4-t-butylphenyl)disulfide, bis(2,4,5-tri-t-butylphenyl)disulfide, and bis(penta-t-butylphenyl)disulfide; diphenyl disulfides substituted with carboxyl groups, such as bis(4-carboxyphenyl)disulfide, bis(2,4,6-tricarboxyphenyl)disulfide, and bis(pentacarboxyphenyl)disulfide; diphenyl disulfides substituted with alkoxycarbonyl groups, such as bis(4-methoxycarbonylphenyl)disulfide, bis(2,4,6-trimethoxycarbonylphenyl)disulfide, and bis(pentamethoxycarbonylphenyl)disulfide; diphenyl disulfides substituted with formyl groups, such as bis(4-formylphenyl)disulfide, bis(2,4,6-triformylphenyl)disulfide, and bis(pentaformylphenyl)disulfide; diphenyl disulfides substituted with acyl groups, such as bis(4-acetylphenyl)disulfide, bis(2,4,6-triacetylphenyl)disulfide, and bis(pentaacetylphenyl)disulfide; diphenyl disulfides substituted with carbonyl halide groups, such as bis(4-chlorocarbonylphenyl)disulfide, bis(2,4,6-tri(chlorocarbonyl)phenyl)disulfide, and bis(penta(chlorocarbonyl)phenyl)disulfide; diphenyl disulfides substituted with sulfo groups, such as bis(4-sulfophenyl)disulfide, bis(2,4,6-trisulfophenyl)disulfide, and bis(pentasulfophenyl)disulfide; diphenyl disulfides substituted with alkoxysulfonyl groups, such as bis(4-methoxysulfonylphenyl)disulfide, bis(2,4,6-trimethoxysulfonylphenyl)disulfide, and bis(pentamethoxysulfonylphenyl)disulfide; diphenyl disulfides substituted with sulfonyl halide groups, such as bis(4-chlorosulfonylphenyl)disulfide, bis(2,4,6-tri(chlorosulfonyl)phenyl)disulfide, and bis(penta(chlorosulfonyl)phenyl)disulfide; diphenyl disulfides substituted with sulfino groups, such as bis(4-sulfinophenyl)disulfide, bis(2,4,6-trisulfinophenyl)disulfide, and bis(pentasulfinophenyl)disulfide; diphenyl disulfides substituted with alkylsulfinyl groups, such as bis(4-methylsulfinylphenyl)disulfide, bis(2,4,6-tri(methylsulfinyl)phenyl)disulfide, and bis(penta(methylsulfinyl)phenyl)disulfide; diphenyl disulfides substituted with carbamoyl groups, such as bis(4-carbamoylphenyl)disulfide, bis(2,4,6-tricarbamoylphenyl)disulfide, and bis(pentacarbamoylphenyl)disulfide; diphenyl disulfides substituted with alkyl halide groups, such as bis(4-trichloromethylphenyl)disulfide, bis(2,4,6-tri(trichloromethyl)phenyl)disulfide, and bis(penta(trichloromethyl)phenyl)disulfide; diphenyl disulfides substituted with cyano groups, such as bis(4-cyanophenyl)disulfide, bis(2,4,6-tricyanophenyl)disulfide, and bis(pentacyanophenyl)disulfide; and diphenyl disulfides substituted with alkoxy groups, such as bis(4-methoxyphenyl)disulfide, bis(2,4,6-trimethoxyphenyl)disulfide, and bis(pentamethoxyphenyl)disulfide. Each of these diphenyl disulfides is substituted with one type of substituent.

Another example of the organic sulfur compound represented by the chemical formula (2) is a compound substituted with at least one type of the above substituents and another substituent. Examples of the other substituent include a nitro group (-NO₂), an amino group (-NH₂), a hydroxyl group (-OH), and a phenylthio group (-SPh). Specific examples of the compound include bis(4-chloro-2-nitrophenyl)disulfide, bis(4-chloro-2-aminophenyl)disulfide, bis(4-chloro-2-hydroxyphenyl)disulfide, bis(4-chloro-2-phenylthiophenyl)disulfide, bis(4-methyl-2-nitrophenyl)disulfide, bis(4-methyl-2-aminophenyl)disulfide, bis(4-methyl-2-hydroxyphenyl)disulfide, bis(4-methyl-2-phenylthiophenyl)disulfide, bis(4-carboxy-2-nitrophenyl)disulfide, bis(4-carboxy-2-aminophenyl)disulfide, bis(4-carboxy-2-hydroxyphenyl)disulfide, bis(4-carboxy-2-phenylthiophenyl)disulfide, bis(4-methoxycarbonyl-2-nitrophenyl)disulfide, bis(4-methoxycarbonyl-2-aminophenyl)disulfide, bis(4-methoxycarbonyl-2-hydroxyphenyl)disulfide, bis(4-methoxycarbonyl-2-phenylthiophenyl)disulfide, bis(4-formyl-2-nitrophenyl)disulfide, bis(4-formyl-2-aminophenyl)disulfide, bis(4-formyl-2-hydroxyphenyl)disulfide, bis(4-formyl-2-phenylthiophenyl)disulfide, bis(4-acetyl-2-nitrophenyl)disulfide, bis(4-acetyl-2-aminophenyl)disulfide, bis(4-acetyl-2-hydroxyphenyl)disulfide, bis(4-acetyl-2-phenylthiophenyl)disulfide, bis(4-chlorocarbonyl-2-nitrophenyl)disulfide, bis(4-chlorocarbonyl-2-aminophenyl)disulfide, bis(4-chlorocarbonyl-2-hydroxyphenyl)disulfide, bis(4-chlorocarbonyl-2-phenylthiophenyl)disulfide, bis(4-sulfo-2-nitrophenyl)disulfide, bis(4-sulfo-2-aminophenyl)disulfide, bis(4-sulfo-2-hydroxyphenyl)disulfide, bis(4-sulfo-2-phenylthiophenyl)disulfide, bis(4-methoxysulfonyl-2-nitrophenyl)disulfide, bis(4-methoxysulfonyl-2-aminophenyl)disulfide, bis(4-methoxysulfonyl-2-hydroxyphenyl)disulfide, bis(4-methoxysulfonyl-2-phenylthiophenyl)disulfide, bis(4-chlorosulfonyl-2-nitrophenyl)disulfide, bis(4-chlorosulfonyl-2-aminophenyl)disulfide, bis(4-chlorosulfonyl-2-hydroxyphenyl)disulfide, bis(4-chlorosulfonyl-2-phenylthiophenyl)disulfide, bis(4-sulfino-2-nitrophenyl)disulfide, bis(4-sulfino-2-aminophenyl)disulfide, bis(4-sulfino-2-hydroxyphenyl)disulfide, bis(4-sulfino-2-phenylthiophenyl)disulfide, bis(4-methylsulfinyl-2-nitrophenyl)disulfide, bis(4-methylsulfinyl-2-aminophenyl)disulfide, bis(4-methylsulfinyl-2-hydroxyphenyl)disulfide, bis(4-methylsulfinyl-2-phenylthiophenyl)disulfide, bis(4-carbamoyl-2-nitrophenyl)disulfide, bis(4-carbamoyl-2-aminophenyl)disulfide, bis(4-carbamoyl-2-hydroxyphenyl)disulfide, bis(4-carbamoyl-2-phenylthiophenyl)disulfide, bis(4-trichloromethyl-2-nitrophenyl)disulfide, bis(4-trichloromethyl-2-aminophenyl)disulfide, bis(4-trichloromethyl-2-hydroxyphenyl)disulfide, bis(4-trichloromethyl-2-phenylthiophenyl)disulfide, bis(4-cyano-2-nitrophenyl)disulfide, bis(4-cyano-2-aminophenyl)disulfide, bis(4-cyano-2-hydroxyphenyl)disulfide, bis(4-cyano-2-phenylthiophenyl)disulfide, bis(4-methoxy-2-nitrophenyl)disulfide, bis(4-methoxy-2-aminophenyl)disulfide, bis(4-methoxy-2-hydroxyphenyl)disulfide, and bis(4-methoxy-2-phenylthiophenyl)disulfide.

Still another example of the organic sulfur compound represented by the chemical formula (2) is a compound substituted with two or more types of substituents. Specific examples of the compound include bis(4-acetyl-2-chlorophenyl)disulfide, bis(4-acetyl-2-methylphenyl)disulfide, bis(4-acetyl-2-carboxyphenyl)disulfide, bis(4-acetyl-2-methoxycarbonylphenyl)disulfide, bis(4-acetyl-2-formylphenyl)disulfide, bis(4-acetyl-2-chlorocarbonylphenyl)disulfide, bis(4-acetyl-2-sulfophenyl)disulfide, bis(4-acetyl-2-methoxysulfonylphenyl)disulfide, bis(4-acetyl-2-chlorosulfonylphenyl)disulfide, bis(4-acetyl-2-sulfinophenyl)disulfide, bis(4-acetyl-2-methylsulfinylphenyl)disulfide, bis(4-acetyl-2-carbamoylphenyl)disulfide, bis(4-acetyl-2-trichloromethylphenyl)disulfide, bis(4-acetyl-2-cyanophenyl)disulfide, and bis(4-acetyl-2-methoxyphenyl)disulfide.

Examples of the organic sulfur compound represented by the chemical formula (3) include thiophenol sodium salt; thiophenol sodium salts substituted with halogen groups, such as 4-fluorothiophenol sodium salt, 2,5-difluorothiophenol sodium salt, 2,4,5-trifluorothiophenol sodium salt, 2,4,5,6-tetrafluorothiophenol sodium salt, pentafluorothiophenol sodium salt, 4-chlorothiophenol sodium salt, 2,5-dichlorothiophenol sodium salt, 2,4,5-trichlorothiophenol sodium salt, 2,4,5,6-tetrachlorothiophenol sodium salt, pentachlorothiophenol sodium salt, 4-bromothiophenol sodium salt, 2,5-dibromothiophenol sodium salt, 2,4,5-tribromothiophenol sodium salt, 2,4,5,6-tetrabromothiophenol sodium salt, pentabromothiophenol sodium salt, 4-iodothiophenol sodium salt, 2,5-diiodothiophenol sodium salt, 2,4,5-triiodothiophenol sodium salt, 2,4,5,6-tetraiodothiophenol sodium salt, and pentaiodothiophenol sodium salt; thiophenol sodium salts substituted with alkyl groups, such as 4-methylthiophenol sodium salt, 2,4,5-trimethylthiophenol sodium salt, pentamethylthiophenol sodium salt, 4-t-butylthiophenol sodium salt, 2,4,5-tri-t-butylthiophenol sodium salt, and penta(t-butyl)thiophenol sodium salt; thiophenol sodium salts substituted with carboxyl groups, such as 4-carboxythiophenol sodium salt, 2,4,6-tricarboxythiophenol sodium salt, and pentacarboxythiophenol sodium salt; thiophenol sodium salts substituted with alkoxycarbonyl groups, such as 4-methoxycarbonylthiophenol sodium salt, 2,4,6-trimethoxycarbonylthiophenol sodium salt, and pentamethoxycarbonylthiophenol sodium salt; thiophenol sodium salts substituted with formyl groups, such as 4-formylthiophenol sodium salt, 2,4,6-triformylthiophenol sodium salt, and pentaformylthiophenol sodium salt; thiophenol sodium salts substituted with acyl groups, such as 4-acetylthiophenol sodium salt, 2,4,6-triacetylthiophenol sodium salt, and pentaacetylthiophenol sodium salt; thiophenol sodium salts substituted with carbonyl halide groups, such as 4-chlorocarbonylthiophenol sodium salt, 2,4,6-tri(chlorocarbonyl)thiophenol sodium salt, and penta(chlorocarbonyl)thiophenolsodiumsalt; thiophenolsodium salts substituted with sulfo groups, such as 4-sulfothiophenol sodium salt, 2,4,6-trisulfothiophenol sodium salt, and pentasulfothiophenol sodium salt; thiophenol sodium salts substituted with alkoxysulfonyl groups, such as 4-methoxysulfonylthiophenol sodium salt, 2,4,6-trimethoxysulfonylthiophenol sodium salt, and pentamethoxysulfonylthiophenol sodium salt; thiophenol sodium salts substituted with sulfonyl halide groups, such as 4-chlorosulfonylthiophenol sodium salt, 2,4,6-tri(chlorosulfonyl)thiophenol sodium salt, and penta(chlorosulfonyl)thiophenolsodiumsalt; thiophenolsodium salts substituted with sulfino groups, such as 4-sulfinothiophenol sodium salt, 2,4,6-trisulfinothiophenol sodiumsalt, and pentasulfinothiophenol sodium salt; thiophenol sodium salts substituted with alkylsulfinyl groups, such as 4-methylsulfinylthiophenol sodium salt, 2,4,6-tri(methylsulfinyl)thiophenol sodium salt, and penta (methylsulfinyl)thiophenol sodium salt; thiophenolsodium salts substituted with carbamoyl groups, such as 4-carbamoylthiophenol sodium salt, 2,4,6-tricarbamoylthiophenol sodium salt, and pentacarbamoylthiophenol sodium salt; thiophenol sodium salts substituted with alkyl halide groups, such as 4-trichloromethylthiophenol sodium salt, 2,4,6-tri(trichloromethyl)thiophenol sodium salt, and penta(trichloromethyl)thiophenol sodium salt; thiophenol sodium salts substituted with cyano groups, such as 4-cyanothiophenolsodiumsalt, 2,4,6-tricyanothiophenolsodium salt, and pentacyanothiophenol sodium salt; and thiophenol sodium salts substituted with alkoxy groups, such as 4-methoxythiophenol sodium salt, 2,4,6-trimethoxythiophenol sodium salt, and pentamethoxythiophenol sodium salt. Each of these thiophenol sodium salts is substituted with one type of substituent.

Another example of the organic sulfur compound represented by the chemical formula (3) is a compound substituted with at least one type of the above substituents and another substituent. Examples of the other substituent include a nitro group (-NO₂), an amino group (-NH₂), a hydroxyl group (-OH), and a phenylthio group (-SPh). Specific examples of the compound include 4-chloro-2-nitrothiophenol sodium salt, 4-chloro-2-aminothiophenol sodium salt, 4-chloro-2-hydroxythiophenol sodium salt, 4-chloro-2-phenylthiothiophenol sodium salt, 4-methyl-2-nitrothiophenol sodium salt, 4-methyl-2-aminothiophenol sodium salt, 4-methyl-2-hydroxythiophenol sodium salt, 4-methyl-2-phenylthiothiophenol sodium salt, 4-carboxy-2-nitrothiophenol sodium salt, 4-carboxy-2-aminothiophenol sodium salt, 4-carboxy-2-hydroxythiophenol sodium salt, 4-carboxy-2-phenylthiothiophenol sodium salt, 4-methoxycarbonyl-2-nitrothiophenol sodium salt, 4-methoxycarbonyl-2-aminothiophenol sodium salt, 4-methoxycarbonyl-2-hydroxythiophenol sodium salt, 4-methoxycarbonyl-2-phenylthiothiophenol sodium salt, 4-formyl-2-nitrothiophenol sodium salt, 4-formyl-2-aminothiophenol sodium salt, 4-formyl-2-hydroxythiophenol sodium salt, 4-formyl-2-phenylthiothiophenol sodium salt, 4-acetyl-2-nitrothiophenol sodium salt, 4-acetyl-2-aminothiophenol sodium salt, 4-acetyl-2-hydroxythiophenol sodium salt, 4-acetyl-2-phenylthiothiophenol sodium salt, 4-chlorocarbonyl-2-nitrothiophenol sodium salt, 4-chlorocarbonyl-2-aminothiophenol sodium salt, 4-chlorocarbonyl-2-hydroxythiophenol sodium salt, 4-chlorocarbonyl-2-phenylthiothiophenol sodium salt, 4-sulfo-2-nitrothiophenol sodium salt, 4-sulfo-2-aminothiophenol sodium salt, 4-sulfo-2-hydroxythiophenol sodium salt, 4-sulfo-2-phenylthiothiophenol sodium salt, 4-methoxysulfonyl-2-nitrothiophenol sodium salt, 4-methoxysulfonyl-2-aminothiophenol sodium salt, 4-methoxysulfonyl-2-hydroxythiophenol sodium salt, 4-methoxysulfonyl-2-phenylthiothiophenol sodium salt, 4-chlorosulfonyl-2-nitrothiophenol sodium salt, 4-chlorosulfonyl-2-aminothiophenol sodium salt, 4-chlorosulfonyl-2-hydroxythiophenol sodium salt, 4-chlorosulfonyl-2-phenylthiothiophenol sodium salt, 4-sulfino-2-nitrothiophenol sodium salt, 4-sulfino-2-aminothiophenol sodium salt, 4-sulfino-2-hydroxythiophenol sodium salt, 4-sulfino-2-phenylthiothiophenol sodium salt, 4-methylsulfinyl-2-nitrothiophenol sodium salt, 4-methylsulfinyl-2-aminothiophenol sodium salt, 4-methylsulfinyl-2-hydroxythiophenol sodium salt, 4-methylsulfinyl-2-phenylthiothiophenol sodium salt, 4-carbamoyl-2-nitrothiophenol sodium salt, 4-carbamoyl-2-aminothiophenol sodium salt, 4-carbamoyl-2-hydroxythiophenol sodium salt, 4-carbamoyl-2-phenylthiothiophenol sodium salt, 4-trichloromethyl-2-nitrothiophenol sodium salt, 4-trichloromethyl-2-aminothiophenol sodium salt, 4-trichloromethyl-2-hydroxythiophenol sodium salt, 4-trichloromethyl-2-phenylthiothiophenol sodium salt, 4-cyano-2-nitrothiophenol sodium salt, 4-cyano-2-aminothiophenol sodium salt, 4-cyano-2-hydroxythiophenol sodium salt, 4-cyano-2-phenylthiothiophenol sodium salt, 4-methoxy-2-nitrothiophenol sodium salt, 4-methoxy-2-aminothiophenol sodium salt, 4-methoxy-2-hydroxythiophenol sodium salt, and 4-methoxy-2-phenylthiothiophenol sodium salt.

Still another example of the organic sulfur compound represented by the chemical formula (3) is a compound substituted with two or more types of substituents. Specific examples of the compound include 4-acetyl-2-chlorothiophenol sodium salt, 4-acetyl-2-methylthiophenol sodium salt, 4-acetyl-2-carboxythiophenol sodium salt, 4-acetyl-2-methoxycarbonylthiophenol sodium salt, 4-acetyl-2-formylthiophenol sodium salt, 4-acetyl-2-chlorocarbonylthiophenol sodium salt, 4-acetyl-2-sulfothiophenol sodium salt, 4-acetyl-2-methoxysulfonylthiophenol sodium salt, 4-acetyl-2-chlorosulfonylthiophenol sodium salt, 4-acetyl-2-sulfinothiophenol sodium salt, 4-acetyl-2-methylsulfinylthiophenol sodium salt, 4-acetyl-2-carbamoylthiophenol sodium salt, 4-acetyl-2-trichloromethylthiophenol sodium salt, 4-acetyl-2-cyanothiophenol sodium salt, and 4-acetyl-2-methoxythiophenol sodium salt. Examples of the monovalent metal represented by M1 in the chemical formula (3) include sodium, lithium, potassium, copper (I), and silver (I) .

Examples of the organic sulfur compound represented by the chemical formula (4) include thiophenol zinc salt; thiophenol zinc salts substituted with halogen groups, such as 4-fluorothiophenol zinc salt, 2,5-difluorothiophenol zinc salt, 2,4,5-trifluorothiophenol zinc salt, 2,4,5,6-tetrafluorothiophenol zinc salt, pentafluorothiophenol zinc salt, 4-chlorothiophenol zinc salt, 2,5-dichlorothiophenol zinc salt, 2,4,5-trichlorothiophenol zinc salt, 2,4,5,6-tetrachlorothiophenol zinc salt, pentachlorothiophenol zinc salt, 4-bromothiophenol zinc salt, 2,5-dibromothiophenolzincsalt,2,4,5-tribromothiophenolzinc salt, 2,4,5,6-tetrabromothiophenol zinc salt, pentabromothiophenol zinc salt, 4-iodothiophenol zinc salt, 2,5-diiodothiophenol zinc salt, 2,4,5-triiodothiophenol zinc salt, 2,4,5,6-tetraiodothiophenol zinc salt, and pentaiodothiophenol zinc salt; thiophenol zinc salts substituted with alkyl groups, such as 4-methylthiophenol zinc salt, 2,4,5-trimethylthiophenol zinc salt, pentamethylthiophenol zinc salt, 4-t-butylthiophenol zinc salt, 2,4,5-tri-t-butylthiophenol zinc salt, and penta-t-butylthiophenol zinc salt; thiophenol zinc salts substituted with carboxyl groups, such as 4-carboxythiophenol zinc salt, 2,4,6-tricarboxythiophenol zinc salt, and pentacarboxythiophenol zinc salt; thiophenol zinc salts substituted with alkoxycarbonyl groups, such as 4-methoxycarbonylthiophenol zinc salt, 2,4,6-trimethoxycarbonylthiophenol zinc salt, and pentamethoxycarbonylthiophenol zinc salt; thiophenol zinc salts substituted with formyl groups, such as 4-formylthiophenol zinc salt, 2,4,6-triformylthiophenol zinc salt, and pentaformylthiophenol zinc salt; thiophenol zinc salts substituted with acyl groups, such as 4-acetylthiophenol zinc salt, 2,4,6-triacetylthiophenol zinc salt, and pentaacetylthiophenol zinc salt; thiophenol zinc salts substituted with carbonyl halide groups, such as 4-chlorocarbonylthiophenol zinc salt, 2,4,6-tri(chlorocarbonyl)thiophenol zinc salt, and penta(chlorocarbonyl)thiophenol zinc salt; thiophenol zinc salts substituted with sulfo groups, such as 4-sulfothiophenol zinc salt, 2,4,6-trisulfothiophenol zinc salt, and pentasulfothiophenol zinc salt; thiophenol zinc salts substituted with alkoxysulfonyl groups, such as 4-methoxysulfonylthiophenol zinc salt, 2,4,6-trimethoxysulfonylthiophenol zinc salt, and pentamethoxysulfonylthiophenol zinc salt; thiophenol zinc salts substituted with sulfonyl halide groups, such as 4-chlorosulfonylthiophenol zinc salt, 2,4,6-tri(chlorosulfonyl)thiophenol zinc salt, and penta(chlorosulfonyl)thiophenol zinc salt; thiophenol zinc salts substituted with sulfino groups, such as 4-sulfinothiophenolzincsalt, 2,4,6-trisulfinothiophenolzinc salt, and pentasulfinothiophenol zinc salt; thiophenol zinc salts substituted with alkylsulfinyl groups, such as 4-methylsulfinylthiophenol zinc salt, 2,4,6-tri(methylsulfinyl)thiophenol zinc salt, and penta(methylsulfinyl)thiophenol zinc salt; thiophenol zinc salts substituted with carbamoyl groups, such as 4-carbamoylthiophenol zinc salt, 2,4,6-tricarbamoylthiophenol zinc salt, and pentacarbamoylthiophenol zinc salt; thiophenol zinc salts substituted with alkyl halide groups, such as 4-trichloromethylthiophenol zinc salt, 2,4,6-tri(trichloromethyl)thiophenol zinc salt, and penta(trichloromethyl)thiophenol zinc salt; thiophenol zinc salts substituted with cyano groups, such as 4-cyanothiophenol zinc salt, 2,4,6-tricyanothiophenol zinc salt, and pentacyanothiophenol zinc salt; and thiophenol zinc salts substituted with alkoxy groups, such as 4-methoxythiophenol zinc salt, 2,4,6-trimethoxythiophenol zinc salt, and pentamethoxythiophenol zinc salt. Each of these thiophenol zinc salts is substituted with one type of substituent.

Another example of the organic sulfur compound represented by the chemical formula (4) is a compound substituted with at least one type of the above substituents and another substituent. Examples of the other substituent include a nitro group (-NO₂), an amino group (-NH₂), a hydroxyl group (-OH), and a phenylthio group (-SPh). Specific examples of the compound include 4-chloro-2-nitrothiophenol zinc salt, 4-chloro-2-aminothiophenol zinc salt, 4-chloro-2-hydroxythiophenol zinc salt, 4-chloro-2-phenylthiothiophenol zinc salt, 4-methyl-2-nitrothiophenol zinc salt, 4-methyl-2-aminothiophenol zinc salt, 4-methyl-2-hydroxythiophenol zinc salt, 4-methyl-2-phenylthiothiophenol zinc salt, 4-carboxy-2-nitrothiophenol zinc salt, 4-carboxy-2-aminothiophenol zinc salt, 4-carboxy-2-hydroxythiophenol zinc salt, 4-carboxy-2-phenylthiothiophenol zinc salt, 4-methoxycarbonyl-2-nitrothiophenol zinc salt, 4-methoxycarbonyl-2-aminothiophenol zinc salt, 4-methoxycarbonyl-2-hydroxythiophenol zinc salt, 4-methoxycarbonyl-2-phenylthiothiophenol zinc salt, 4-formyl-2-nitrothiophenol zinc salt, 4-formyl-2-aminothiophenol zinc salt, 4-formyl-2-hydroxythiophenol zinc salt, 4-formyl-2-phenylthiothiophenol zinc salt, 4-acetyl-2-nitrothiophenol zinc salt, 4-acetyl-2-aminothiophenol zinc salt, 4-acetyl-2-hydroxythiophenol zinc salt, 4-acetyl-2-phenylthiothiophenol zinc salt, 4-chlorocarbonyl-2-nitrothiophenol zinc salt, 4-chlorocarbonyl-2-aminothiophenol zinc salt, 4-chlorocarbonyl-2-hydroxythiophenol zinc salt, 4-chlorocarbonyl-2-phenylthiothiophenol zinc salt, 4-sulfo-2-nitrothiophenol zinc salt, 4-sulfo-2-aminothiophenol zinc salt, 4-sulfo-2-hydroxythiophenol zinc salt, 4-sulfo-2-phenylthiothiophenol zinc salt, 4-methoxysulfonyl-2-nitrothiophenol zinc salt, 4-methoxysulfonyl-2-aminothiophenol zinc salt, 4-methoxysulfonyl-2-hydroxythiophenol zinc salt, 4-methoxysulfonyl-2-phenylthiothiophenol zinc salt, 4-chlorosulfonyl-2-nitrothiophenol zinc salt, 4-chlorosulfonyl-2-aminothiophenol zinc salt, 4-chlorosulfonyl-2-hydroxythiophenol zinc salt, 4-chlorosulfonyl-2-phenylthiothiophenol zinc salt, 4-sulfino-2-nitrothiophenol zinc salt, 4-sulfino-2-aminothiophenol zinc salt, 4-sulfino-2-hydroxythiophenol zinc salt, 4-sulfino-2-phenylthiothiophenol zinc salt, 4-methylsulfinyl-2-nitrothiophenol zinc salt, 4-methylsulfinyl-2-aminothiophenol zinc salt, 4-methylsulfinyl-2-hydroxythiophenol zinc salt, 4-methylsulfinyl-2-phenylthiothiophenol zinc salt, 4-carbamoyl-2-nitrothiophenol zinc salt, 4-carbamoyl-2-aminothiophenol zinc salt, 4-carbamoyl-2-hydroxythiophenol zinc salt, 4-carbamoyl-2-phenylthiothiophenol zinc salt, 4-trichloromethyl-2-nitrothiophenol zinc salt, 4-trichloromethyl-2-aminothiophenol zinc salt, 4-trichloromethyl-2-hydroxythiophenol zinc salt, 4-trichloromethyl-2-phenylthiothiophenol zinc salt, 4-cyano-2-nitrothiophenol zinc salt, 4-cyano-2-aminothiophenol zinc salt, 4-cyano-2-hydroxythiophenol zinc salt, 4-cyano-2-phenylthiothiophenol zinc salt, 4-methoxy-2-nitrothiophenol zinc salt, 4-methoxy-2-aminothiophenol zinc salt, 4-methoxy-2-hydroxythiophenol zinc salt, and 4-methoxy-2-phenylthiothiophenol zinc salt.

Still another example of the organic sulfur compound represented by the chemical formula (4) is a compound substituted with two or more types of substituents. Specific examples of the compound include 4-acetyl-2-chlorothiophenol zinc salt, 4-acetyl-2-methylthiophenol zinc salt, 4-acetyl-2-carboxythiophenol zinc salt, 4-acetyl-2-methoxycarbonylthiophenol zinc salt, 4-acetyl-2-formylthiophenol zinc salt, 4-acetyl-2-chlorocarbonylthiophenol zinc salt, 4-acetyl-2-sulfothiophenol zinc salt, 4-acetyl-2-methoxysulfonylthiophenol zinc salt, 4-acetyl-2-chlorosulfonylthiophenol zinc salt, 4-acetyl-2-sulfinothiophenol zinc salt, 4-acetyl-2-methylsulfinylthiophenol zinc salt, 4-acetyl-2-carbamoylthiophenol zinc salt, 4-acetyl-2-trichloromethylthiophenol zinc salt, 4-acetyl-2-cyanothiophenol zinc salt, and 4-acetyl-2-methoxythiophenol zinc salt. Examples of the bivalent metal represented by M2 in the chemical formula (4) include zinc, magnesium, calcium, strontium, barium, titanium (II), manganese (II), iron (II), cobalt (II), nickel (II), zirconium (II), and tin (II).

Examples of thionaphthols include 2-thionaphthol, 1-thionaphthol, 2-chloro-1-thionaphthol, 2-bromo-1-thionaphthol, 2-fluoro-1-thionaphthol, 2-cyano-1-thionaphthol, 2-acetyl-1-thionaphthol, 1-chloro-2-thionaphthol, 1-bromo-2-thionaphthol, 1-fluoro-2-thionaphthol, 1-cyano-2-thionaphthol, 1-acetyl-2-thionaphthol, and metal salts thereof. 1-thionaphthol, 2-thionaphthol, and zinc salts thereof are preferred.

Examples of sulfenamide type organic sulfur compounds include N-cyclohexyl-2-benzothiazole sulfenamide, N-oxydiethylene-2-benzothiazole sulfenamide, and N-t-butyl-2-benzothiazole sulfenamide. Examples of thiuram type organic sulfur compounds include tetramethylthiuram monosulfide, tetramethylthiuram disulfide, tetraethylthiuram disulfide, tetrabutylthiuram disulfide, and dipentamethylenethiuram tetrasulfide. Examples of dithiocarbamates include zinc dimethyldithiocarbamate, zinc diethyldithiocarbamate, zinc dibutyldithiocarbamate, zinc ethylphenyldithiocarbamate, sodium dimethyldithiocarbamate, sodium diethyldithiocarbamate, copper (II) dimethyldithiocarbamate, iron (III) dimethyldithiocarbamate, selenium diethyldithiocarbamate, and tellurium diethyldithiocarbamate. Examples of thiazole type organic sulfur compounds include 2-mercaptobenzothiazole (MBT); dibenzothiazyl disulfide (MBTS); a sodium salt, a zinc salt, a copper salt, and a cyclohexylamine salt of 2-mercaptobenzothiazole; 2-(2,4-dinitrophenyl)mercaptobenzothiazole; and 2-(2,6-diethyl-4-morpholinothio)benzothiazole.

From the standpoint that an outer-hard/inner-soft structure is easily obtained, particularly preferable organic sulfur compounds (e) are 2-thionaphthol, bis(pentabromophenyl)disulfide, and 2,6-dichlorothiophenol.

From the standpoint that an outer-hard/inner-soft structure is easily obtained, the amount of the organic sulfur compound (e) is preferably equal to or greater than 0.05 parts by weight, more preferably equal to or greater than 0.1 parts by weight, and particularly preferably equal to or greater than 0.2 parts by weight, per 100 parts by weight of the base rubber. In light of resilience performance, the amount is preferably equal to or less than 5.0 parts by weight, more preferably equal to or less than 3.0 parts by weight, and particularly preferably equal to or less than 1.0 parts by weight, per 100 parts by weight of the base rubber.

For the purpose of adjusting specific gravity and the like, a filler may be included in the envelope layer 10. Examples of suitable fillers include zinc oxide, barium sulfate, calcium carbonate, and magnesium carbonate. The amount of the filler is determined as appropriate so that the intended specific gravity of the core 4 is accomplished. A particularly preferable filler is zinc oxide. Zinc oxide serves not only as a specific gravity adjuster but also as a crosslinking activator.

According to need, an anti-aging agent, a coloring agent, a plasticizer, a dispersant, sulfur, a vulcanization accelerator, and the like are added to the rubber composition of the envelope layer 10. Crosslinked rubber powder or synthetic resin powder may also be dispersed in the rubber composition.

The envelope layer 10 preferably has a thickness of 7 mm or greater but 17 mm or less. The core 4 that includes the envelope layer 10 having a thickness of 7 mm or greater has excellent resilience performance. In this respect, the thickness of the envelope layer 10 is more preferably equal to or greater than 8 mm. The core 4 that includes the envelope layer 10 having a thickness of 17 mm or less can include a cover 6 having a sufficient thickness. The golf ball 2 has excellent durability. In this respect, the thickness of the envelope layer 10 is more preferably equal to or less than 16 mm.

During heating of the core 4, the heat of a crosslinking reaction of the base rubber remains near the central point of the core 4. Thus, during heating of the core 4, the temperature at the central portion is high. The temperature gradually decreases from the central point toward the surface. The acid and/or the salt (d) reacts with a metal salt of the co-crosslinking agent (b) to inhibit formation of metal crosslinks or break metal crosslinks, respectively. This reaction is accelerated in a region where the temperature is high. In other words, inhibition of formation of metal crosslinks and breaking of metal crosslinks are likely to occur near the innermost portion of the envelope layer 10 where the temperature is high, and are unlikely to occur near the surface of the envelope layer 10. As a result, the crosslinking density of the envelope layer 10 increases from its inside toward its outside. In the envelope layer 10, the hardness linearly increases from its inside toward its outside. Furthermore, since the rubber composition includes the organic sulfur compound (e) together with the acid and/or the salt (d), the gradient of the hardness distribution can be controlled, and the degree of the outer-hard/inner-soft structure of the core 4 can be increased.

The hardness H(0.0) at the central point of the core 4 is preferably equal to or greater than 40.0 but equal to or less than 70.0. The golf ball 2 having a hardness H(0.0) of 40.0 or greater has excellent resilience performance. In this respect, the hardness H(0.0) is more preferably equal to or greater than 45.0 and particularly preferably equal to or greater than 47.0. In the core 4 having a hardness H(0.0) of 70.0 or less, an outer-hard/inner-soft structure can be achieved. In the golf ball 2 that includes the core 4, spin can be suppressed. In this respect, the hardness H(0.0) is more preferably equal to or less than 68.0 and particularly preferably equal to or less than 65.0.

The hardness Hs at the surface of the core 4 is preferably equal to or greater than 70.0 but equal to or less than 95.0. In the core 4 having a hardness Hs of 70.0 or greater, an outer-hard/inner-soft structure can be achieved. In the golf ball 2 that includes the core 4, spin can be suppressed. In this respect, the hardness Hs is more preferably equal to or greater than 75.0 and particularly preferably equal to or greater than 80.0. The golf ball 2 having a hardness Hs of 95.0 or less has excellent durability. In this respect, the hardness Hs is more preferably equal to or less than 94.0 and particularly preferably equal to or less than 92.0.

The core 4 preferably has a diameter of 38.0 mm or greater but 41.5 mm or less. The core 4 having a diameter of 38.0 mm or greater can achieve excellent resilience performance of the golf ball 2. In this respect, the diameter is more preferably equal to or greater than 38.5 mm and particularly preferably equal to or greater than 39.0 mm. In the golf ball 2 that includes the core 4 having a diameter of 41.5 mm or less, the cover 6 can have a sufficient thickness. The golf ball 2 that includes the cover 6 having a large thickness has excellent durability. In this respect, the diameter is more preferably equal to or less than 41.0 mm.

In light of feel at impact, the core 4 has an amount of compressive deformation Dc of preferably 3.5 mm or greater and particularly preferably 3.8 mm or greater. In light of resilience performance of the core 4, the amount of compressive deformation DC is preferably equal to or less than 4.5 mm and particularly preferably equal to or less than 4.0 mm.

In light of resilience performance, a JIS-C hardness H (Ie) at the innermost portion of the envelope layer 10 is preferably equal to or greater than 55, more preferably equal to or greater than 60, and particularly preferably equal to or greater than 62. In light of continuity of the hardness distribution, the hardness H(Ie) is preferably equal to or less than 75, more preferably equal to or less than 70, and particularly preferably equal to or less than 67. The hardness H(Ie) is measured at a hemisphere obtained by cutting the core 4. The hardness H(Ie) is measured by pressing a JIS-C type hardness scale against the cut plane of the hemisphere. The hardness scale is pressed against a region surrounded by: a first circle that is the boundary between the center 8 and the envelope layer 10; and a third circle that is concentric with the first circle and has a radius larger than the radius of the first circle by 1 mm. For the measurement, an automated rubber hardness measurement machine (trade name "P1", manufactured by Kobunshi Keiki Co., Ltd.), to which this hardness scale is mounted, is used. The hardness H(Ie) in the present embodiment is the same as H(8.0).

From the standpoint that an outer-hard/inner-soft structure is achieved in the sphere consisting of the center 8 and the envelope layer 10, the hardness H(Ie) is preferably greater than the hardness H(Sc). In light of suppression of spin, the difference (H(Ie)-H(Sc)) between both hardnesses is preferably equal to or greater than 2 and more preferably equal to or greater than 3. In light of linearity of the hardness distribution, the difference (H(Ie)-H(Sc)) is preferably equal to or less than 10. The golf ball 2 that includes the core 4 that meets this condition has excellent flight distance performance.

For the cover 6, a resin composition is suitably used. Examples of the base polymer of the resin composition include ionomer resins, polystyrenes, polyesters, polyamides, and polyolefins.

Particularly preferable base polymers are ionomer resins. The golf ball 2 that includes the cover 6 including an ionomer resin has excellent resilience performance. An ionomer resin and another resin may be used in combination for the cover 6. In this case, the principal component of the base polymer is preferably the ionomer resin. Specifically, the proportion of the ionomer resin to the entire base polymer is preferably equal to or greater than 50% by weight, more preferably equal to or greater than 60% by weight, and particularly preferably equal to or greater than 70% by weight.

Examples of preferable ionomer resins include binary copolymers formed with an α-olefin and an α,β-unsaturated carboxylic acid having 3 to 8 carbon atoms . A preferable binary copolymer includes 80% by weight or greater but 90% by weight or less of an α-olefin, and 10% by weight or greater but 20% by weight or less of an α, β-unsaturated carboxylic acid. The binary copolymer has excellent resilience performance. Examples of other preferable ionomer resins include ternary copolymers formed with: an α-olefin; an α,β-unsaturated carboxylic acid having 3 to 8 carbon atoms; and an α, β-unsaturated carboxylate ester having 2 to 22 carbon atoms. A preferable ternary copolymer includes 70% by weight or greater but 85% by weight or less of an α-olefin, 5% by weight or greater but 30%by weight or less of an α, β-unsaturated carboxylic acid, and 1% by weight or greater but 25% by weight or less of an α, β-unsaturated carboxylate ester. The ternary copolymer has excellent resilience performance. For the binary copolymers and the ternary copolymers, preferable α-olefins are ethylene and propylene, while preferable α,β-unsaturated carboxylic acids are acrylic acid and methacrylic acid. Particularly preferable ionomer resins are a copolymer formed with ethylene and acrylic acid and a copolymer formed with ethylene and methacrylic acid.

In the binary copolymers and the ternary copolymers, some of the carboxyl groups are neutralized with metal ions. Examples of metal ions for use in neutralization include sodium ion, potassium ion, lithium ion, zinc ion, calcium ion, magnesium ion, aluminum ion, and neodymium ion. The neutralization may be carried out with two or more types of metal ions. Particularly suitable metal ions in light of resilience performance and durability of the golf ball 2 are sodium ion, zinc ion, lithium ion, and magnesium ion.

Specific examples of ionomer resins include trade names "Himilan 1555", "Himilan 1557", "Himilan 1605", "Himilan 1706", "Himilan 1707", "Himilan 1856", "Himilan 1855", "Himilan AM7311", "Himilan AM7315", "Himilan AM7317", "Himilan AM7318", "Himilan AM7329", "Himilan MK7320", and "Himilan MK7329", manufactured by Du Pont-MITSUI POLYCHEMICALS Co., Ltd. ; trade names "Surlyn 6120", "Surlyn 6910", "Surlyn 7930", "Surlyn 7940", "Surlyn 8140", "Surlyn 8150", "Surlyn 8940", "Surlyn 8945", "Surlyn 9120", "Surlyn 9150", "Surlyn 9910", "Surlyn 9945", "Surlyn AD8546", "HPF1000", and "HPF2000", manufactured by E.I. du Pont de Nemours and Company; and trade names "IOTEK 7010", "IOTEK 7030", "IOTEK 7510", "IOTEK 7520", "IOTEK 8000", and "IOTEK 8030", manufactured by ExxonMobil Chemical Company.

Two or more ionomer resins may be used in combination for the cover 6. An ionomer resin neutralized with a monovalent metal ion, and an ionomer resin neutralized with a bivalent metal ion may be used in combination.

A preferable resin that can be used in combination with an ionomer resin is an ethylene-(meth)acrylic acid copolymer. The copolymer is obtained by a copolymerization reaction of a monomer composition that contains ethylene and (meth)acrylic acid. In the copolymer, some of the carboxyl groups are neutralized with metalions. The copolymer contains 3% by weight or greater but 25% by weight or less of a (meth)acrylic acid component. An ethylene-(meth)acrylic acid copolymer having a polar functional group is particularly preferred. A specific example of ethylene- (meth) acrylic acid copolymers is trade name "NUCREL N1050H" manufactured by Du Pont-MITSUI POLYCHEMICALS Co., Ltd.

In light of flight performance of the golf ball 2, the proportion of the ethylene- (meth) acrylic acid copolymer to the entire base polymer is preferably equal to or greater than 10% by weight and more preferably equal to or greater than 25% by weight. In light of durability, the proportion is preferably equal to or less than 45% by weight.

The cover 6 may include a highly elastic resin. Specific examples of the highly elastic resin include polyamides.

According to need, a coloring agent such as titanium dioxide, a filler such as barium sulfate, a dispersant, an antioxidant, an ultraviolet absorber, a light stabilizer, a fluorescent material, a fluorescent brightener, and the like are included in the resin composition of the cover 6 in an adequate amount.

In light of resilience performance, the cover 6 has a JIS-C hardness Ho of preferably 70 or greater and particularly preferably 80 or greater. In light of feel at impact, the hardness Ho is preferably equal to or less than 96, more preferably equal to or less than 94, and particularly preferably equal to or less than 92.

The hardness Ho is measured with a JIS-C type hardness scale mounted to an automated rubber hardness measurement machine (trade name "P1", manufactured by Kobunshi Keiki Co., Ltd.). For the measurement, a slab that is formed by hot press and that has a thickness of about 2 mm is used. A slab kept at 23°C for two weeks is used for the measurement. At the measurement, three slabs are stacked. A slab formed from the same resin composition as the resin composition of the cover 6 is used for the measurement.

A Shore D hardness of the cover 6 is measured according to the standards of "ASTM-D 2240-68" with a Shore D type hardness scale mounted to an automated rubber hardness measurement machine (trade name "P1", manufactured by Kobunshi Keiki Co., Ltd.). For the measurement, a slab that is formed by hot press and that has a thickness of about 2 mm is used. A slab kept at 23°C for two weeks is used for the measurement. At the measurement, three slabs are stacked.

In light of flight distance performance and feel at impact of the golf ball 2, the Shore D hardness of the cover 6 is preferably equal to or greater than 52 but equal to or less than 65.

From the standpoint that an outer-hard/inner-soft structure can be achieved in the golf ball 2 that includes the core 4 and the cover 6, the hardness Ho of the cover 6 is preferably greater than the surface hardness Hs of the core 4. In light of suppression of spin, the difference (Ho-Hs) between both hardnesses is preferably equal to or greater than 7 and more preferably equal to or greater than 8. In light of durability, the difference (Ho-Hs) is preferably equal to or less than 20.

The cover 6 preferably has a thickness To of 0.8 mm or greater but 2.0 mm or less. The golf ball 2 that includes the cover 6 having a thickness To of 0.8 mm or greater has excellent durability. In this respect, the thickness To is particularly preferably equal to or greater than 0.9 mm. The golf ball 2 that includes the cover 6 having a thickness To of 2.0 mm or less can include a large core 4. The large core 4 contributes to the resilience performance of the golf ball 2. In this respect, the thickness To is particularly preferably equal to or less than 1.5 mm.

For forming the cover 6, known methods such as injection molding, compression molding, and the like can be used. When forming the cover 6, the dimples 12 are formed by pimples formed on the cavity face of a mold.

In light of feel at impact, the golf ball 2 has an amount of compressive deformation Db of preferably 2.2 mm or greater, more preferably 2.5 mm or greater, and particularly preferably 2.8 mm or greater. In light of resilience performance, the amount of compressive deformation Db is preferably equal to or less than 4.0 mm, more preferably equal to or less than 3.7 mm, and particularly preferably equal to or less than 3.4 mm.

For measurement of the amount of compressive deformation, a YAMADA type compression tester is used. In the tester, a sphere such as the core 4, the golf ball 2, or the like is placed on a hard plate made of metal. Next, a cylinder made of metal gradually descends toward the sphere. The sphere, squeezed between the bottom face of the cylinder and the hardplate, becomes deformed. A migration distance of the cylinder, starting from the state in which an initial load of 98 N is applied to the sphere up to the state in which a final load of 1274 N is applied thereto, is measured.

The golf ball may include a center formed from a rubber composition that includes the acid and/or the salt (d); and an envelope layer formed from a rubber composition that does not include the acid and/or the salt (d). The rubber composition of the center is the same as the rubber composition of the envelope layer 10 shown in FIG. 1. A hardness distribution of the center is appropriate.

The golf ball may include a center formed from a rubber composition that includes the acid and/or the salt (d); and an envelope layer formed from a rubber composition that includes the acid and/or the salt (d). The rubber composition of the center is the same as the rubber composition of the envelope layer 10 shown in FIG. 1. The rubber composition of the envelope layer is the same as the rubber composition of the envelope layer 10 shown in FIG. 1. A hardness distribution of the center is appropriate. A hardness distribution of the envelope layer is appropriate.

### EXAMPLES

The followingwill show the effects of the present invention by means of Examples, but the present invention should not be construed in a limited manner based on the description of these Examples.

### [Example 1]

A rubber composition was obtained by kneading 100 parts by weight of a high-cis polybutadiene (trade name "BR-730", manufactured by JSR Corporation), 34 parts by weight of magnesium oxide (trade name "MAGSARAT 150ST", manufactured by Kyowa Chemical Industry Co., Ltd.), 28 parts by weight of methacrylic acid, and 0.75 parts by weight of dicumyl peroxide. This rubber composition was placed into a mold including upper and lower mold halves each having a hemispherical cavity, and heated at 170°C for 25 minutes to obtain a center with a diameter of 15 mm.

A rubber composition was obtained by kneading 100 parts by weight of a high-cis polybutadiene (the aforementioned "BR-730"), 26.0 parts by weight of zinc diacrylate (trade name "Sanceler SR", manufactured by SANSHIN CHEMICAL INDUSTRY CO., LTD.), 5 parts by weight of zinc oxide, an appropriate amount of barium sulfate, 0.2 parts by weight of 2-thionaphthol, 10 parts by weight of zinc stearate, and 0.75 parts by weight of dicumyl peroxide. Half shells were formed from this rubber composition. The center was covered with two of these half shells. The center and the half shells were placed into a mold including upper and lower mold halves each having a hemispherical cavity, and heated at 150°C for 20 minutes to obtain a core with a diameter of 40.5 mm. An envelope layer was formed from the rubber composition. The thickness of the envelope layer was 12.75 mm. The amount of barium sulfate was adjusted such that the specific gravity of the envelope layer coincides with the specific gravity of the center and the weight of a ball is 45.4 g.

A resin composition was obtained by kneading 5 parts by weight of an ionomer resin (the aforementioned "Himilan AM7337"), 10 parts by weight of another ionomer resin (the aforementioned "Himilan 1555"), 55 parts by weight of still another ionomer resin (the aforementioned "Himilan AM7329"), 30 parts by weight of an ethylene-methacrylic acid copolymer (the aforementioned "NUCREL N1050H"), 3 parts by weight of titanium dioxide, and 0.2 parts by weight of an ultraviolet absorber (trade name "TINUVIN 770", manufactured by Ciba Japan K.K.) with a twin-screw kneading extruder. The sphere consisting of the center and the envelope layer was placed into a final mold having a large number of pimples on its cavity face. The resin composition was injected around the sphere by injection molding to form a cover with a thickness of 1.1 mm. Dimples having a shape that is the inverted shape of the pimples were formed on the cover. A clear paint including a two-component curing type polyurethane as a base material was applied to this cover to obtain a golf ball of Example 1 with a diameter of 42.7 mm.

### [Examples 2 to 15 and Comparative Examples 1 to 4]

Golf balls of Examples 2 to 15 and Comparative Examples 1 to 4 were obtained in the same manner as Example 1, except the specifications of the center, the envelope layer, and the cover were as shown in Tables 9 to 12 below. The composition of the center is shown in detail in Table 1 below. The composition of the envelope layer is shown in detail in Tables 2 and 3 below. The composition of the cover is shown in detail in Table 4 below. The hardness of the core is shown in Tables 5 to 8 below.

### [Hit with Driver (W#1)]

A driver with a titanium head (trade name "XXIO", manufactured by DUNLOP SPORTS CO. LTD., shaft hardness: R, loft angle: 11.0°) was attached to a swing machine manufactured by True Temper Co. A golf ball was hit under the condition of a head speed of 40 m/sec. The spin rate was measured immediately after the hit. Furthermore, the distance from the launch point to the stop point was measured. The average value of data obtained by 10 measurements is shown in Tables 9 to 12 below.

**Table 1 Composition of Center (parts by weight)**

| Type | A | B | C |
|---|---|---|---|
| BR-730 | 100 | 100 | 100 |
| MAGSARAT 150ST | 34 | - | - |
| Methacrylic acid | 28 | - | - |
| Sanceler SR | - | 20 | 26 |
| Zinc oxide | - | 5 | 5 |
| Barium sulfate | - | * | * |
| 2-thionaphthol | - | 0.2 | 0.2 |
| Zinc octoate | - | 5 | - |
| Zinc stearate | - | - | 10 |
| Dicumyl peroxide | 0.75 | 0.75 | 0.75 |

| | | | |
|---|---|---|---|
| * Appropriate amount | | | |

**Table 2 Composition of Envelope Layer (parts by weight)**

| Type | E1 | E2 | E3 | E4 | E5 | E6 |
|---|---|---|---|---|---|---|
| BR-730 | 100 | 100 | 100 | 100 | 100 | 100 |
| Sanceler SR | 26.0 | 27.5 | 29.5 | 25.5 | 25.0 | 25.5 |
| Zinc oxide | 5 | 5 | 5 | 5 | 5 | 5 |
| Barium sulfate | * | * | * | * | * | * |
| 2-thionaphthol | 0.2 | 0.2 | 0.2 | 0.2 | 0.2 | 0.2 |
| Zinc octoate | - | - | - | 2.5 | 5 | - |
| Zinc laurate | - | - | - | - | - | 10 |
| Zinc myristate | - | - | - | - | - | - |
| Zinc stearate | 10 | 20 | 30 | - | - | - |
| Dicumyl peroxide | 0.75 | 0.75 | 0.75 | 0.75 | 0.75 | 0.75 |

| | | | | | | |
|---|---|---|---|---|---|---|
| * Appropriate amount | | | | | | |

**Table 3 Composition of Envelope Layer (parts by weight)**

| Type | E7 | E8 | E9 | E10 | E11 |
|---|---|---|---|---|---|
| BR-730 | 100 | 100 | 100 | 100 | 100 |
| Sanceler SR | 26.0 | 25.5 | 27.0 | 26.5 | 31.5 |
| Zinc oxide | 5 | 5 | 5 | 5 | 5 |
| Barium sulfate | * | * | * | * | * |
| 2-thionaphthol | 0.2 | 0.2 | 0.2 | 0.2 | 0.2 |
| Zinc octoate | - | - | - | - | - |
| Zinc laurate | - | - | - | - | - |
| Zinc myristate | 5 | 10 | - | - | - |
| Zinc stearate | - | - | - | 0.5 | 40 |
| Dicumyl peroxide | 0.75 | 0.75 | 0.75 | 0.75 | 0.75 |

| | | | | | |
|---|---|---|---|---|---|
| * Appropriate amount | | | | | |

The details of the compounds listed in Tables 1 to 3 are as follows.

BR-730: a high-cis polybutadiene manufactured by JSR Corporation (cis-1,4-bond content: 96% by weight, 1,2-vinyl bond content: 1.3% by weight, Mooney viscosity (ML₁₊₄(100°C)) : 55, molecular weight distribution (Mw/Mn): 3)

MAGSARAT 150ST: magnesium oxide manufactured by Kyowa Chemical Industry Co., Ltd.

Methacrylic acid: a product of MITSUBISHI RAYON CO., LTD.

Sanceler SR: zinc diacrylate manufactured by SANSHIN CHEMICAL INDUSTRY CO., LTD. (a product coated with 10% by weight of stearic acid)

Zinc oxide: trade name "Ginrei R" manufactured by Toho Zinc Co., Ltd.

Barium sulfate : trade name "Barium Sulfate BD" manufactured by Sakai Chemical Industry Co., Ltd.

2-thionaphthol: a product of Tokyo Chemical Industry Co., Ltd.

Zinc octoate: a product of Mitsuwa Chemicals Co., Ltd. (purity: 99% or greater)

Zinc stearate: a product of Wako Pure Chemical Industries, Ltd. (purity: 99% or greater)

Zinc laurate: a product of Mitsuwa Chemicals Co., Ltd. (purity: 99% or greater)

Zinc myristate: a product of NOF Corporation (purity: 90 or greater)

Dicumyl peroxide: a product of NOF Corporation

**Table 4 Composition of Cover (parts by weight)**

| Type | C1 | C2 |
|---|---|---|
| Himilan AM7337 | 5 | 30 |
| Himilan 1555 | 10 | - |
| Himilan AM7329 | 55 | 30 |
| NUCREL N1050H | 30 | - |
| Rabalon T3221C | - | 40 |
| Titanium dioxide | 3 | 6 |
| TINUVIN 770 | 0.2 | 0.2 |

**Table 5 Hardness Distribution of Core (JIS-C hardness)**

| | Ex.1 | Ex.2 | Ex.3 | Ex.4 | Ex.5 |
|---|---|---|---|---|---|
| H(0.0) | 55.0 | 55.0 | 55.0 | 55.0 | 55.0 |
| H(2.5) | 56.0 | 58.5 | 58.5 | 56.0 | 56.0 |
| H(5.0) | 58.0 | 60.5 | 60.5 | 58.0 | 58.0 |
| H(7.0) | 60.0 | 62.5 | 62.5 | 60.0 | 60.0 |
| H(7.5) | - | - | - | - | - |
| H(8.0) | 64.8 | 64.8 | 67.7 | 64.8 | 64.8 |
| H(10.0) | 67.0 | 67.0 | 68.6 | 67.0 | 67.0 |
| H(12.5) | 71.8 | 71.8 | 70.6 | 71.8 | 71.8 |
| H(15.0) | 76.0 | 76.0 | 74.1 | 76.0 | 76.0 |
| H(17.5) | 79.5 | 79.5 | 79.0 | 79.5 | 79.5 |
| Hs | 83.0 | 83.0 | 83.0 | 83.0 | 83.0 |

**Table 6 Hardness Distribution of Core (JIS-C hardness)**

| | Ex.6 | Ex.7 | Ex.8 | Ex.9 | Ex.10 |
|---|---|---|---|---|---|
| H(0.0) | 55.0 | 55.0 | 55.0 | 55.0 | 55.0 |
| H(2.5) | 56.0 | 56.0 | 56.0 | 56.0 | 56.0 |
| H(5.0) | 58.0 | 58.0 | 58.0 | 58.0 | 58.0 |
| H(7.0) | 60.0 | 60.0 | 60.0 | 60.0 | 60.0 |
| H(7.5) | - | - | - | - | - |
| H(8.0) | 62.8 | 64.0 | 65.2 | 63.8 | 64.4 |
| H(10.0) | 66.6 | 66.8 | 67.4 | 67.9 | 66.4 |
| H(12.5) | 73.7 | 71.0 | 71.0 | 73.8 | 71.0 |
| H(15.0) | 75.4 | 72.1 | 75.3 | 77.8 | 77.0 |
| H(17.5) | 78.2 | 73.0 | 80.6 | 82.0 | 80.7 |
| Hs | 81.6 | 79.1 | 84.1 | 84.9 | 83.3 |

**Table 7 Hardness Distribution of Core (JIS-C hardness)**

| | Ex.11 | Ex.12 | Ex.13 | Ex.14 | Ex.15 |
|---|---|---|---|---|---|
| H(0.0) | 55.0 | 55.0 | 55.0 | 55.0 | 55.0 |
| H(2.5) | 56.0 | 56.0 | 56.0 | 56.0 | 56.0 |
| H(5.0) | 58.0 | 58.0 | 58.0 | 58.0 | 58.0 |
| H(7.0) | 60.0 | 60.0 | 60.0 | 60.0 | 60.0 |
| H(7.5) | - | - | - | - | - |
| H(8.0) | 67.0 | 65.5 | 68.8 | 64.3 | 64.8 |
| H(10.0) | 68.5 | 67.4 | 70.0 | 67.0 | 67.0 |
| H(12.5) | 70.1 | 71.8 | 71.2 | 70.4 | 71.8 |
| H(15.0) | 76.7 | 77.5 | 74.8 | 70.5 | 76.0 |
| H(17.5) | 80.5 | 81.3 | 78.8 | 68.5 | 79.5 |
| Hs | 83.4 | 84.5 | 82.9 | 70.7 | 83.0 |

**Table 8 Hardness Distribution of Core (JIS-C hardness)**

| | Comp. Ex.1 | Comp. Ex.2 | Comp. Ex.3 | Comp. Ex.4 |
|---|---|---|---|---|
| H(0.0) | 55.0 | 55.0 | 54.0 | 54.0 |
| H(2.5) | 56.0 | 56.0 | 59.8 | 59.8 |
| H(5.0) | 58.0 | 58.0 | 63.0 | 63.0 |
| H(7.0) | 60.0 | 60.0 | - | 64.2 |
| H(7.5) | - | - | 64.6 | - |
| H(8.0) | 64.8 | 67.7 | - | 62.8 |
| H(10.0) | 67.0 | 68.6 | 67.0 | 66.6 |
| H(12.5) | 71.8 | 70.6 | 71.8 | 73.7 |
| H(15.0) | 76.0 | 74.1 | 76.0 | 75.4 |
| H(17.5) | 79.5 | 79.0 | 79.5 | 78.2 |
| Hs | 83.0 | 83.0 | 83.0 | 81.6 |

**Table 9 Results of Evaluation**

| | Ex.1 | Ex.2 | Ex.3 | Ex.4 | Ex.5 |
|---|---|---|---|---|---|
| Center | | | | | |
| Composition | A | B | B | A | A |
| Acid/salt (PHR) | 0 | 5 | 5 | 0 | 0 |
| Diameter (mm) | 15.0 | 15.0 | 15.0 | 15.0 | 15.0 |
| H(Sc) (JIS-C) | 60.0 | 62.5 | 62.5 | 60.0 | 60.0 |

| Envelope layer | | | | | |
|---|---|---|---|---|---|
| Composition | E1 | E1 | E9 | E1 | E1 |
| Acid/salt (PHR) | 10 | 10 | 0 | 10 | 10 |
| Thickness (mm) | 12.75 | 12.75 | 12.75 | 13.05 | 12.45 |
| H(Ie) (JIS-C) | 64.8 | 64.8 | 67.7 | 64.8 | 64.8 |

| Core | | | | | |
|---|---|---|---|---|---|
| Hs-H(0.0) (JIS-C) | 28.0 | 28.0 | 28.0 | 28.0 | 28.0 |
| Dc (mm) | 3.90 | 3.93 | 3.94 | 3.90 | 3.90 |

| Cover | | | | | |
|---|---|---|---|---|---|
| Composition | C1 | C1 | C1 | C1 | C1 |
| To (mm) | 1.1 | 1.1 | 1.1 | 0.8 | 1.4 |
| Ho (JIS-C) | 92.0 | 92.0 | 92.0 | 92.0 | 92.0 |
| Hardness (ShoreD) | 61.0 | 61.0 | 61.0 | 61.0 | 61.0 |
| H(Ie)-H(Sc) (JIS-C) | 4.8 | 2.3 | 5.2 | 4.8 | 4.8 |
| Ho - Hs (JIS-C) | 9.0 | 9.0 | 9.0 | 9.0 | 9.0 |
| Db (mm) | 3.29 | 3.29 | 3.32 | 3.28 | 3.30 |
| W#1 spin rate (rpm) | 2480 | 2420 | 2510 | 2505 | 2460 |
| W#1 distance (m) | 201.5 | 202.0 | 201.1 | 201.2 | 201.7 |

**Table 10 Results of Evaluation**

| | Ex.6 | Ex.7 | Ex.8 | Ex.9 | Ex.10 |
|---|---|---|---|---|---|
| Center | | | | | |
| Composition | A | A | A | A | A |
| Acid/salt (PHR) | 0 | 0 | 0 | 0 | 0 |
| Diameter (mm) | 15 | 15 | 15 | 15 | 15 |
| H(Sc) (JIS-C) | 60.0 | 60.0 | 60.0 | 60.0 | 60.0 |

| Envelope layer | | | | | |
|---|---|---|---|---|---|
| Composition | E2 | E3 | E4 | E5 | E6 |
| Acid/salt (PHR) | 20 | 30 | 2.5 | 5 | 10 |
| Thickness (mm) | 12.75 | 12.75 | 12.75 | 12.75 | 12.75 |
| H(Ie) (JIS-C) | 62.8 | 64.0 | 65.2 | 63.8 | 64.4 |

| Core | | | | | |
|---|---|---|---|---|---|
| Hs-H(0.0) (JIS-C) | 26.6 | 24.1 | 29.1 | 29.9 | 28.3 |
| Dc (mm) | 3.91 | 3.90 | 3.92 | 3.88 | 3.90 |

| Cover | | | | | |
|---|---|---|---|---|---|
| Composition | C1 | C1 | C1 | C1 | C1 |
| To (mm) | 1.1 | 1.1 | 1.1 | 1.1 | 1.1 |
| Ho (JIS-C) | 92.0 | 92.0 | 92.0 | 92.0 | 92.0 |
| Hardness (ShoreD) | 61.0 | 61.0 | 61.0 | 61.0 | 61.0 |
| H(Ie)-H(Sc) (JIS-C) | 2.8 | 4.0 | 5.2 | 3.8 | 4.4 |
| Ho - Hs (JIS-C) | 10.4 | 12.9 | 7.9 | 7.1 | 8.7 |
| Db (mm) | 3.30 | 3.29 | 3.31 | 3.27 | 3.29 |
| W#1 spin rate (rpm) | 2495 | 2520 | 2440 | 2410 | 2485 |
| W#1 distance (m) | 201.3 | 201.1 | 201.8 | 202.1 | 201.4 |

**Table 11 Results of Evaluation**

| | Ex.11 | Ex.12 | Ex.13 | Ex.14 | Ex.15 |
|---|---|---|---|---|---|
| Center | | | | | |
| Composition | A | A | A | A | A |
| Acid/salt (PHR) | 0 | 0 | 0 | 0 | 0 |
| Diameter (mm) | 15 | 15 | 15 | 15 | 15 |
| H(Sc) (JIS-C) | 60.0 | 60.0 | 60.0 | 60.0 | 60.0 |

| Envelope layer | | | | | |
|---|---|---|---|---|---|
| Composition | E7 | E8 | E10 | E11 | E1 |
| Acid/salt (PHR) | 5 | 10 | 0.5 | 40 | 10 |
| Thickness (mm) | 12.75 | 12.75 | 12.75 | 12.75 | 11.75 |
| H(Ie) (JIS-C) | 67.0 | 65.5 | 68.8 | 64.3 | 64.8 |

| Core | | | | | |
|---|---|---|---|---|---|
| Hs-H(0.0) (JIS-C) | 28.4 | 29.5 | 27.9 | 15.7 | 28.0 |
| Dc (mm) | 3.91 | 3.89 | 3.91 | 3.91 | 3.90 |

| Cover | | | | | |
|---|---|---|---|---|---|
| Composition | C1 | C1 | C1 | C1 | C1 |
| To (mm) | 1.1 | 1.1 | 1.1 | 1.1 | 2.1 |
| Ho (JIS-C) | 92.0 | 92.0 | 92.0 | 92.0 | 92.0 |
| Hardness (ShoreD) | 61.0 | 61.0 | 61.0 | 61.0 | 61.0 |
| H(Ie)-H(Sc)(JIS-C) | 7.0 | 5.5 | 8.8 | 4.3 | 4.8 |
| Ho - Hs (JIS-C) | 8.6 | 7.5 | 9.1 | 21.3 | 9.0 |
| Db (mm) | 3.30 | 3.28 | 3.30 | 3.30 | 3.31 |
| W#1 spin rate (rpm) | 2470 | 2460 | 2500 | 2660 | 2540 |
| W#1 distance (m) | 201.5 | 201.6 | 201.2 | 199.4 | 200.8 |

**Table 12 Results of Evaluation**

| | Comp. Ex.1 | Comp. Ex.2 | Comp. Ex.3 | Comp. Ex.4 |
|---|---|---|---|---|
| Center | | | | |
| Composition | A | A | C | C |
| Acid/salt (PHR) | 0 | 0 | 10 | 10 |
| Diameter (mm) | 15 | 15 | 40.5 | 15 |
| H(Sc) (JIS-C) | 60.0 | 60.0 | - | 64.2 |

| Envelope layer | | | | |
|---|---|---|---|---|
| Composition | E1 | E9 | - | E2 |
| Acid/salt (PHR) | 10 | 0 | - | 5 |
| Thickness (mm) | 12.75 | 12.75 | - | 12.75 |
| H(Ie) (JIS-C) | 64.8 | 67.7 | - | 62.8 |

| Core | | | | |
|---|---|---|---|---|
| Hs-H(0.0) (JIS-C) | 28.0 | 28.0 | 29.0 | 27.6 |
| Dc (mm) | 3.90 | 3.91 | 3.85 | 3.90 |

| Cover | | | | |
|---|---|---|---|---|
| Composition | C2 | C1 | C1 | C1 |
| To (mm) | 1.1 | 1.1 | 1.1 | 1.1 |
| Ho (JIS-C) | 71.0 | 92.0 | 92.0 | 92.0 |
| Hardness (ShoreD) | 40.0 | 61.0 | 61.0 | 61.0 |
| H(Ie)-H(Sc) (JIS-C) | 4.8 | 7.7 | - | -1.4 |
| Ho - Hs (JIS-C) | -12.0 | 9.0 | 9.0 | 10.4 |
| Db (mm) | 3.31 | 3.30 | 3.24 | 3.29 |
| W#1 spin rate (rpm) | 2630 | 2580 | 2600 | 2565 |
| W#1 distance (m) | 199.8 | 200.3 | 200.1 | 200.4 |

As shown in Tables 9 to 12, the golf balls according to Examples have excellent flight distance performance. From the results of evaluation, advantages of the present invention are clear.

The golf ball according to the present invention can be used for playing golf on golf courses and practicing at driving ranges. The above descriptions are merely for illustrative examples, and various modifications can be made without departing from the principles of the present invention.

## Claims

1. A golf ball comprising a core and a cover positioned outside the core, wherein
the core includes a center and an envelope layer positioned outside the center,
the center is formed by a rubber composition being crosslinked,
the envelope layer is formed by a rubber composition being crosslinked,
at least one of the rubber composition of the center and the rubber composition of the envelope layer includes:
(a) a base rubber;
(b) a co-crosslinking agent;
(c) a crosslinking initiator; and
(d) an acid and/or a salt, wherein the acid and/or salt (d) excludes the co-crosslinking agent (b), and wherein the acid and/or salt (d) is selected from the group consisting of carboxylic acids, sulfonic acids, and phosphoric acid, hydroacids, and salts thereof,
the co-crosslinking agent (b) is:
(b1) an α,β-unsaturated carboxylic acid having 3 to 8 carbon atoms; or
(b2) a metal salt of an α,β-unsaturated carboxylic acid having 3 to 8 carbon atoms,
the JIS-C hardness H(Ie) at an innermost portion of the envelope layer is greater than a JIS-C hardness H(Sc) at an outermost portion of the center,
the JIS-C hardness Ho of the cover is greater than a JIS-C hardness Hs at a surface of the core, and
if the JIS-C hardnesses are measured at 11 measuring points from the core center to the core surface and the distances from the central point of the core to each of these measuring points are plotted in a graph, then at the envelope layer R² of the linear approximation curve obtained by the least-square method is equal to or greater than 0.93.

2. The golf ball according to claim 1, wherein the acid and/or the salt (d) is a carboxylic acid and/or a salt thereof (d1).

3. The golf ball according to claim 2, wherein a carbon number of a carboxylic acid component of the carboxylic acid and/or the salt thereof (d1) is equal to or greater than 1 but equal to or less than 30.

4. The golf ball according to claim 2, wherein the carboxylic acid and/or the salt thereof (d1) is a fatty acid and/or a salt thereof.

5. The golf ball according to claim 2, wherein the carboxylic acid and/or the salt thereof (d1) is a zinc salt of a carboxylic acid.

6. The golf ball according to claim 2, wherein the carboxylic acid and/or the salt thereof (d1) is one or more members selected from the group consisting of zinc octoate, zinc laurate, zinc myristate, and zinc stearate.

7. The golf ball according to claim 1, wherein the rubber composition includes 1.0 parts by weight or greater but less than 40 parts by weight of the acid and/or the salt (d) per 100 parts by weight of the base rubber (a).

8. The golf ball according to claim 1, wherein the rubber composition includes 15 parts by weight or greater but 50 parts by weight or less of the co-crosslinking agent (b) per 100 parts by weight of the base rubber (a).

9. The golf ball according to claim 1, wherein the rubber composition includes 0.2 parts by weight or greater but 5.0 parts by weight or less of the crosslinking initiator (c) per 100 parts by weight of the base rubber (a).

10. The golf ball according to claim 1, wherein
the rubber composition includes the α,β-unsaturated carboxylic acid (b1), and
the rubber composition further includes a metal compound (f).

11. The golf ball according to claim 1, wherein a difference (H(Ie)-H(Sc)) between the hardness H (Ie) and the hardness H (Sc) is equal to or greater than 2.

12. The golf ball according to claim 1, wherein a difference (Ho-Hs) between the hardness Ho and the hardness Hs is equal to or greater than 7.

13. The golf ball according to claim 1, wherein a thickness To of the cover is equal to or greater than 0.8 mm but equal to or less than 2.0 mm.

14. The golf ball according to claim 1, wherein a diameter of the center is equal to or greater than 10 mm but equal to or less than 25 mm.

15. The golf ball according to claim 1, wherein a difference (Hs-H(0.0)) between the hardness Hs and a JIS-C hardness H(0.0) at a central point of the core is equal to or greater than 15.

16. The golf ball according to claim 1, wherein the rubber composition further includes an organic sulfur compound (e).

17. The golf ball according to claim 16, wherein the organic sulfur compound (e) is at least one member selected from the group consisting of thiophenols, diphenyl disulfides, thionaphthols, thiuram disulfides, and metal salts thereof.

18. The golf ball according to claim 16, wherein the rubber composition includes 0.05 parts by weight or greater but 5 parts by weight or less of the organic sulfur compound (e) per 100 parts by weight of the base rubber (a).

19. The golf ball according to claim 1, wherein R² at the envelope layer is equal to or greater than 0.97.

## Patentansprüche

1. Golfball, umfassend einen Kern und eine außerhalb des Kerns angeordnete Abdeckung, wobei
der Kern eine Mitte und eine Hüllschicht umfasst, die außerhalb der Mitte angeordnet ist,
die Mitte durch eine Kautschukzusammensetzung gebildet ist, die vernetzt ist,
die Hüllschicht durch eine Kautschukzusammensetzung gebildet ist, die vernetzt ist,
mindestens eine von der Kautschukzusammensetzung der Mitte und der Kautschukzusammensetzung der Hüllschicht umfasst:
(a) einen Basiskautschuk;
(b) ein Co-Vernetzungsmittel;
(c) einen Vernetzungsinitiator; und
(d) eine Säure und/oder ein Salz, wobei die Säure und/oder das Salz (d) das Co-Vernetzungsmittel (b) ausschließt, und wobei die Säure und/oder das Salz (d) ausgewählt ist aus der Gruppe, bestehend aus Carbonsäuren, Sulfonsäuren und Phosphorsäure, Wasserstoffsäuren und ihren Salzen,
das Co-Vernetzungsmittel (b) ist:
(b1) eine α,β-ungesättigte Carbonsäure mit 3 bis 8 Kohlenstoffatomen; oder
(b2) ein Metallsalz einer α,β-ungesättigten Carbonsäure mit 3 bis 8 Kohlenstoffatomen,
die JIS-C-Härte H(Ie) an einem innersten Abschnitt der Hüllschicht größer ist als eine JIS-C-Härte H(Sc) an einem äußersten Abschnitt der Mitte,
die JIS-C-Härte Ho der Abdeckung größer ist als eine JIS-C-Härte Hs an einer Oberfläche des Kerns, und
wenn die JIS-C-Härten an 11 Messpunkten vor Kernmitte zu der Kernoberfläche gemessen werden und die Abstände von dem zentralen Punkt des Kerns zu jedem dieser Messpunkte in einem Diagramm dargestellt werden, dann ist an der Hüllschicht R² der nach dem Least-Square-Verfahren erhaltenen linearen Näherungskurve gleich oder größer als 0,93.

2. Golfball nach Anspruch 1, wobei die Säure und/oder ihr Salz (d) eine Carbonsäure und/oder eines ihrer Salze (d1) ist.

3. Golfball nach Anspruch 2, wobei eine Kohlenstoffzahl einer Carbonsäurekomponente der Carbonsäure und/oder ihres Salzes (d1) gleich oder größer als 1, aber gleich oder kleiner als 30 ist.

4. Golfball nach Anspruch 2, wobei die Carbonsäure und/oder ihr Salz (d1) eine Fettsäure und/oder eines ihrer Salze ist.

5. Golfball nach Anspruch 2, wobei die Carbonsäure und/oder ihr Salz (d1) ein Zinksalz einer Carbonsäure ist.

6. Golfball nach Anspruch 2, wobei die Carbonsäure und/oder ihr Salz (d1) ein oder mehrere Stoffe sind, ausgewählt aus der Gruppe, bestehend aus Zinkoctoat, Zinklaurat, Zinkmyristat und Zinkstearat.

7. Golfball nach Anspruch 1, wobei die Kautschukzusammensetzung 1,0 Gewichtsteile oder mehr, aber weniger als 40 Gewichtsteile der Säure und/oder des Salzes (d) pro 100 Gewichtsteile des Basiskautschuks (a) umfasst.

8. Golfball nach Anspruch 1, wobei die Kautschukzusammensetzung 15 Gewichtsteile oder mehr, aber 50 Gewichtsteile oder weniger des Co-Vernetzungsmittels (b) pro 100 Gewichtsteile des Basiskautschuks (a) umfasst.

9. Golfball nach Anspruch 1, wobei die Kautschukzusammensetzung 0,2 Gewichtsteile oder mehr, aber 5,0 Gewichtsteile oder weniger des Vernetzungsinitiators (c) pro 100 Gewichtsteile des Basiskautschuks (a) umfasst.

10. Golfball nach Anspruch 1, wobei
die Kautschukzusammensetzung die α,β-ungesättigte Carbonsäure (b1) umfasst, und
die Kautschukzusammensetzung ferner eine Metallverbindung (f) umfasst.

11. Golfball nach Anspruch 1, wobei eine Differenz (H(Ie)-H(Sc)) zwischen der Härte H(Ie) und der Härte H(Sc) gleich oder größer als 2 ist.

12. Golfball nach Anspruch 1, wobei eine Differenz (Ho-Hs) zwischen der Härte Ho und der Härte Hs gleich oder größer als 7 ist.

13. Golfball nach Anspruch 1, wobei eine Dicke To der Abdeckung gleich oder größer als 0,8 mm, aber gleich oder kleiner als 2,0 mm ist.

14. Golfball nach Anspruch 1, wobei ein Durchmesser der Mitte gleich oder größer als 10 mm, aber gleich oder kleiner als 25 mm ist.

15. Golfball nach Anspruch 1, wobei eine Differenz (Hs-H(0.0)) zwischen der Härte Hs und einer JIS-C-Härte H(0.0) an einem zentralen Punkt des Kerns gleich oder größer als 15 ist.

16. Golfball nach Anspruch 1, wobei die Kautschukzusammensetzung ferner eine organische Schwefelverbindung (e) umfasst.

17. Golfball nach Anspruch 16, wobei die organische Schwefelverbindung (e) mindestens ein Stoff ist, ausgewählt aus der Gruppe, bestehend aus Thiophenolen, Diphenyldisulfiden, Thionaphtholen, Thiuramdisulfiden und ihren Metallsalzen.

18. Golfball nach Anspruch 16, wobei die Kautschukzusammensetzung 0,05 Gewichtsteile oder mehr, aber 5 Gewichtsteile oder weniger der organischen Schwefelverbindung (e) pro 100 Gewichtsteile des Basiskautschuks (a) umfasst.

19. Golfball nach Anspruch 1, wobei R² an der Hüllschicht gleich oder größer als 0,97 ist.

## Revendications

1. Balle de golf comprenant un noyau et une couverture positionnée à l'extérieur du noyau, dans laquelle
le noyau inclut un centre et une couche enveloppe positionnée à l'extérieur du centre,
le centre est formé par une composition de caoutchouc qui est réticulée,
la couche enveloppe est formée par une composition de caoutchouc qui est réticulée,
l'une au moins de la composition de caoutchouc du centre et de la composition de caoutchouc de la couche enveloppe inclut :
(a) un caoutchouc de base ;
(b) un agent de co-réticulation ;
(c) un initiateur de réticulation ; et
(d) un acide et/ou un sel, tel que l'acide et/ou le sel (d) exclut l'agent de co-réticulation (b), et tel que l'acide et/ou le sel (d) est sélectionné parmi le groupe comprenant les acides carboxyliques, les acides sulfoniques, et l'acide phosphorique, des hydroacides, et des sels de ceux-ci,
l'agent de co-réticulation (b) est :
(b1) un acide carboxylique α,β-insaturé ayant de 3 à 8 atomes de carbone ; ou
(b2) un sel métallique d'un acide carboxylique α,β-insaturé ayant 3 à 8 atomes de carbone,
la dureté JIS-C H(Ie) au niveau d'une portion la plus intérieure de la couche enveloppe est supérieure à une dureté JIS-C H(Sc) à une portion la plus extérieure du centre,
la dureté JIS-C Ho de la couverture est supérieure à une dureté JIS-C Hs au niveau d'une surface du noyau, et
si les duretés JIS-C sont mesurées à 11 points de mesure en partant du centre du noyau jusqu'à la surface du noyau et si la distance depuis le point central du noyau jusqu'à chacun de ces points de mesure sont reportées dans un graphique, alors au niveau de la couche enveloppe R² de la courbe d'approximation linéaire obtenue par la méthode des moindres carrés est égal ou supérieur à 0,93.

2. Balle de golf selon la revendication 1, dans laquelle l'acide et/ou le sel (d) est un acide carboxylique et/ou un sel de celui-ci (d1).

3. Balle de golf selon la revendication 2, dans laquelle un nombre d'atomes de carbone d'un composant acide carboxylique de l'acide carboxylique et/ou du sel de celui-ci (d1) est égal ou supérieur à 1, mais égal ou inférieur à 30.

4. Balle de golf selon la revendication 2, dans lequel l'acide carboxylique et/ou le sel de celui-ci (d1) est un acide gras et/ou un sel de celui-ci.

5. Balle de golf selon la revendication 2, dans laquelle l'acide carboxylique et/ou le sel de celui-ci (d1) est un sel de zinc d'un acide carboxylique.

6. Balle de golf selon la revendication 2, dans laquelle l'acide carboxylique et/ou le sel de celui-ci (d1) est constitué d'un ou plusieurs éléments sélectionnés parmi le groupe comprenant octoate de zinc, laurate de zinc, myristate de zinc, et stéarate de zinc.

7. Balle de golf selon la revendication 1, dans laquelle la composition de caoutchouc inclut 1,0 parties en poids ou plus mais moins de 40 parties en poids de l'acide et/ou du sel (d) pour 100 parties en poids du caoutchouc de base (a).

8. Balle de golf selon la revendication 1, dans laquelle la composition de caoutchouc inclut 15 parties en poids ou plus mais 50 parties en poids au moins de l'agent de co-réticulation (b) pour 100 parties en poids du caoutchouc de base (a).

9. Balle de golf selon la revendication 1, dans laquelle la composition de caoutchouc inclut 0,2 parties en poids ou plus mais 5,0 parties en poids ou moins de l'initiateur de réticulation (c) pour 100 parties en poids du caoutchouc de base (a).

10. Balle de golf selon la revendication 1, dans laquelle
la composition de caoutchouc inclut l'acide carboxylique α,β-insaturé (b1), et
la composition de caoutchouc inclut en outre un composé métallique (f).

11. Balle de golf selon la revendication 1, dans laquelle une différence (H(Ie)-H(Sc)) entre la dureté H(Ie) et la dureté H(Sc) est égale ou supérieure à 2.

12. Balle de golf selon la revendication 1, dans laquelle une différence (Ho - Hs) entre la dureté Ho est la dureté Hs est égale ou supérieure à 7.

13. Balle de golf selon la revendication 1, dans laquelle une épaisseur To de la couverture est égale ou supérieure à 0,8 mm mais égale ou inférieure à 2,0 mm.

14. Balle de golf selon la revendication 1, dans laquelle un diamètre du centre est égal ou supérieur à 10 mm mais égal ou inférieur à 25 mm.

15. Balle de golf selon la revendication 1, dans laquelle une différence (Hs-H(0.0)) entre la dureté Hs et une dureté JIS-C H(0.0) à un point central du noyau est égale ou supérieure à 15.

16. Balle de golf selon la revendication 1, dans laquelle la composition de caoutchouc inclut en outre un composé sulfuré organique (e).

17. Balle de golf selon la revendication 16, dans laquelle le composé sulfuré organique (e) est au moins un élément sélectionné parmi le groupe comprenant les éléments suivants : thiophénols, diphényl disulfides, thionaphthols, thiuram disulfides, et les sels métalliques de ceux-ci.

18. Balle de golf selon la revendication 16, dans laquelle la composition de caoutchouc inclut 0,05 parties en poids ou plus mais 5 parties en poids ou moins du composé sulfuré organique (e) pour 100 parties en poids du caoutchouc de base (a).

19. Balle de golf selon la revendication 1, dans laquelle R² au niveau de la couche enveloppe est égal ou supérieur à 0,97.
